# EUROPEAN PATENT APPLICATION

(11) **EP 4 629 578 A1**
(43) Date of publication of application: **08.10.2025**
(21) Application number: 23905846.4
(22) Date of filing: 15.12.2023
(51) Int. Cl.: H04L 27/26

(54) **METHOD AND APPARATUS FOR DEMODULATING SIGNAL, AND METHOD AND APPARATUS FOR TRANSMITTING SYNCHRONIZATION SIGNAL**

(30) Priority: 21.12.2022 CN 202211647617; 16.02.2023 CN 202310156223
(71) Applicant: Huawei Technologies Co., Ltd., Shenzhen, Guangdong 518129 (CN)
(72) Inventor: LI, Qiang, Shenzhen, Guangdong 518129 (CN)
(74) Representative: Maiwald GmbH
(86) International application number: PCT/CN2023/139281
(87) International publication number: WO 2024/131682

(57) **Abstract**

Embodiments of this application provide a method and an apparatus for demodulating a signal, and a method and an apparatus for sending a synchronization signal. The method for demodulating a signal includes: A terminal device receives a synchronization signal over a low power link in at least two communication links, where the synchronization signal includes M first modulated symbols and N CPs, the M first modulated symbols are non-OFDM symbols, M is a positive integer greater than 1, and N is a positive integer; determines time domain locations of the M first modulated symbols; determines time domain locations of the N CPs based on the time domain locations of the M first modulated symbols; and demodulates, based on the time domain locations of the N CPs, a signal transmitted on the low power link. The foregoing method can reduce power consumption of the low power link.

## Description

This application claims priority to Chinese Patent Application No. 202211647617.3, filed with the China National Intellectual Property Administration on December 21, 2022 and entitled "METHOD FOR SENDING SYNCHRONIZATION SIGNAL", and to Chinese Patent Application No. 202310156223.6, filed with the China National Intellectual Property Administration on February 16, 2023 and entitled "METHOD AND APPARATUS FOR DEMODULATING SIGNAL, AND METHOD AND APPARATUS FOR SENDING SYNCHRONIZATION SIGNAL", which are incorporated herein by reference in their entireties.

### TECHNICAL FIELD

This application relates to the communication field, and specifically, to a method and an apparatus for demodulating a signal, and a method and an apparatus for sending a synchronization signal.

### BACKGROUND

In the field of wireless communication, energy saving is an important indicator of a terminal. To save energy, communication links of some terminals include at least two links with different power consumption, for example, a main link (main radio) and a wake up link (wake up radio, WUR). The main link has high transmission efficiency but high power consumption, and the wake up link has low transmission efficiency but low power consumption. The terminal usually enables the wake up link when no data is transmitted, and enables the main link when data is transmitted.

Introduction of the wake up link significantly reduces communication power consumption of the terminal. However, some application scenarios impose a stricter requirement on the communication power consumption of the terminal. For example, a battery capacity of a wearable device is very small. High communication power consumption results in frequent charging, affecting user experience. For another example, it is difficult to replace a battery of a wireless sensor in some industrial internets. High communication power consumption results in an increased battery replacement frequency, reducing production efficiency. Therefore, how to reduce the power consumption of the wake up link is a problem to be resolved currently.

### SUMMARY

Embodiments of this application provide a method and an apparatus for demodulating a signal, and a method and an apparatus for sending a synchronization signal, to reduce power consumption of a wake up link.

According to a first aspect, a method for demodulating a signal is provided. The method includes: receiving a synchronization signal over a low power link in at least two communication links of a terminal device, where the synchronization signal includes M first modulated symbols and N cyclic prefixes (cyclic prefix, CP), the M first modulated symbols are non-orthogonal frequency division multiplexing (orthogonal frequency division multiplexing, OFDM) symbols, M is a positive integer greater than 1, and N is a positive integer; determining time domain locations of the M first modulated symbols; determining time domain locations of the N CPs based on the time domain locations of the M first modulated symbols; and demodulating, based on the time domain locations of the N CPs, a signal transmitted on the low power link.

In this embodiment, there is a power consumption difference between the at least two communication links of the terminal device. A communication link with lower power consumption may be referred to as a low power link. For example, the low power link may be a wake up link. The synchronization signal is used for synchronization between a receiver of the low power link and a transmitter. After receiving the synchronization signal, a receiving end determines the time domain locations of the M first modulated symbols of the synchronization signal. Then, the receiving end determines the time domain locations of the N CPs based on the time domain locations of the M first modulated symbols. For example, a relationship between the time domain locations of the M first modulated symbols and the time domain locations of the N CPs may be defined in a communication protocol or indicated by a transmitting end. Because intervals between CPs in a wake up signal has an association relationship, the receiving end may determine time domain locations of all the CPs in the wake up signal by determining the time domain locations of the N CPs in the synchronization signal, to demodulate the wake up signal. Because a modulated symbol of the wake up signal is a non-OFDM symbol, precise time-frequency synchronization and complex signal processing do not need to be performed for demodulating the non-OFDM symbol, so that power consumption of the wake up link can be reduced. In addition, in this embodiment, an OFDM receiver does not need to be used, so that costs of the receiving end are reduced.

Optionally, a start location of the M first modulated symbols is an end location of a first CP in the N CPs.

In this implementation, a location relationship between the start location of the M first modulated symbols and the end location of the first CP is fixed. After determining the time domain locations of the M first modulated symbols, the receiving end may determine a time domain location of the first CP based on the location relationship, and does not need to determine a distance between the start location of the M first modulated symbols and the end location of the first CP, reducing complexity of determining the time domain locations of the N CPs.

Optionally, N is a positive integer greater than 1, lengths of the N CPs are different, and the first CP is a CP with a longer length in the N CPs.

In this implementation, the lengths of the N CPs are different. When the start location of the M first modulated symbols is an end location of a long CP, the receiving end can determine accurate locations of the N CPs without using other information.

Optionally, the first CP is any one of the N CPs.

In this implementation, the start location of the M first modulated symbols may be an end location of any CP, and a manner of sending the synchronization signal is more flexible. In a multi-cell communication scenario, to avoid interference between neighboring cells, synchronization signals of the neighboring cells may need to be sent at different time domain locations. Therefore, this implementation can resolve a problem of interference between the synchronization signals of the neighboring cells.

Optionally, N is a positive integer greater than 1, and the lengths of the N CPs are different. The determining time domain locations of the N CPs based on the time domain locations of the M first modulated symbols includes: determining the time domain locations of the N CPs based on a preset CP length and the time domain locations of the M first modulated symbols, where the preset CP length is an average value of lengths of a CPs whose lengths are L1 and b CPs whose lengths are L2, and both a and b are positive integers.

When the first CP is any one of the N CPs, the receiving end cannot determine whether the first CP is a long CP or a short CP. In this implementation, the receiving end does not need to determine whether the first CP is a long CP or a short CP, but determines the time domain locations of the N CPs based on the preset CP length and the time domain locations of the M first modulated symbols, in other words, the receiving end considers the lengths of the N CPs including the first CP as the preset CP length. In this case, although a specific error exists, the preset CP length does not differ greatly from a length of the long CP (or the short CP). After the time domain locations of the N CPs are determined based on the preset CP length, the receiving end may still demodulate, based on the time domain locations of the N CPs, information carried in the wake up signal.

Optionally, before the receiving a synchronization signal over a low power link, the method further includes: receiving first information, where the first information indicates that the start location of the M first modulated symbols is the end location of the first CP.

A location relationship between the M first modulated symbols and the first CP is indicated by using the first information, and the location relationship between the M first modulated symbols and the first CP may be flexibly set based on different communication scenarios.

Optionally, a start location of the M first modulated symbols is a preset location between any two adjacent CPs in the N CPs, where N is a positive integer greater than 1.

In this implementation, the M first modulated symbols are the preset location between any two adjacent CPs in the N CPs, and a manner of sending the synchronization signal is more flexible.

Optionally, before the receiving a synchronization signal over a low power link, the method further includes: receiving second information, where the second information indicates that the start location of the M first modulated symbols is the preset location between any two adjacent CPs in the N CPs.

A location relationship between the M first modulated symbols and the first CP is indicated by using the second information, and the location relationship between the M first modulated symbols and the first CP may be flexibly set based on different communication scenarios.

Optionally, in the N CPs, every two adjacent CPs are separated by m first modulated symbols, where N is a positive integer greater than 1, and m is a positive integer.

In this implementation, the relationship between the time domain locations of the M first modulated symbols and the time domain locations of the N CPs is fixed. After determining the time domain locations of the M first modulated symbols, the receiving end may determine the time domain locations of the N CPs based on the location relationship, and does not need to determine a distance between the start location of the M first modulated symbols and the end location of the first CP, reducing complexity of determining the time domain locations of the N CPs.

Optionally, the determining time domain locations of the N CPs based on the time domain locations of the M first modulated symbols includes: determining the time domain locations of the N CPs based on the time domain locations of the M first modulated symbols and an OFDM symbol index corresponding to the start location of the M first modulated symbols.

When the first CP is any one of the N CPs, the receiving end cannot determine whether the first CP is a long CP or a short CP, and the receiving end needs to determine an OFDM symbol index corresponding to the start location of the M first modulated symbols. If the OFDM symbol index is 0 or 7, it indicates that the first CP is a long CP. If the OFDM symbol index is an index other than 0 and 7, it indicates that the first CP is a short CP. Therefore, in this implementation, the receiving end can accurately determine the time domain locations of the N CPs.

Optionally, before the receiving a synchronization signal over a low power link, the method further includes: receiving third information, where the third information indicates the OFDM symbol index.

The third information indicates the OFDM symbol index, so that a location relationship between the M first modulated symbols and the first CP may be flexibly set.

Optionally, before the receiving a synchronization signal over a low power link, the method further includes: receiving fourth information, where the fourth information indicates a location of the start location of the M first modulated symbols in an OFDM symbol corresponding to the OFDM symbol index.

In some cases, the location relationship between the start location of the M first modulated symbols and the end location of the first CP is not fixed. In this case, in addition to the OFDM symbol index corresponding to the start location of the M first modulated symbols, the receiving end further needs to know a specific location of the start location of the M first modulated symbols in the OFDM symbol corresponding to the OFDM index. In this implementation, the receiving end may determine the location relationship between the start location of the M first modulated symbols and the end location of the first CP when the location relationship is not fixed.

Optionally, a correspondence exists between the start location of the M first modulated symbols and a synchronization sequence carried in the synchronization signal.

After determining the synchronization sequence, the receiving end may determine the start location of the M first modulated symbols based on the correspondence, and the transmitting end does not need to separately send indication information, to reduce signaling overheads.

Optionally, the determining time domain locations of the M first modulated symbols includes: determining the time domain locations of the M first modulated symbols based on a plurality of local sequences and the synchronization sequence carried in the synchronization signal. The plurality of local sequences include a target sequence, and the target sequence is a sequence that is the same as the synchronization sequence.

The receiving end may sequentially use the plurality of local sequences and a sequence in the wake up signal to perform a sliding correlation operation. When a correlation peak occurs when the sliding correlation operation is performed on a local sequence, the local sequence is the target sequence. When the correlation peak occurs, a sequence that is in the wake up signal and on which the sliding correlation operation is performed with the target sequence is the synchronization sequence. The receiving end may determine that a time domain location of the synchronization sequence when the correlation peak occurs is a location of the M first modulated symbols.

Optionally, the first modulated symbol is a frequency shift keying (frequency shift keying, FSK) symbol, an amplitude shift keying (amplitude shift keying, ASK) symbol, or an on-off-keying (on-off-keying, OOK) symbol.

According to a second aspect, a method for sending a synchronization signal is provided. The method includes: generating a synchronization signal, where the synchronization signal includes M first modulated symbols and N CPs, a modulated symbol of the synchronization signal is a non-OFDM symbols, an association relationship exists between time domain locations of the M first modulated symbols and time domain locations of the N CPs, a receiving end of the synchronization signal includes at least two communication links, the synchronization signal is used for synchronization between a receiver of a low power link in the at least two communication links of the receiving end and a transmitter, M is a positive integer greater than 1, and N is a positive integer; and sending the synchronization signal.

In this embodiment, there is a power consumption difference between the at least two communication links of the receiving end of the synchronization signal. A communication link with lower power consumption may be referred to as a low power link. For example, the low power link may be a wake up link. The association relationship exists between the start location of the M first modulated symbols and the time domain locations of the N CPs. After determining the start location of the M first modulated symbols, the receiving end may determine the time domain locations of the N CPs based on the time domain locations of the M first modulated symbols. For example, a relationship between the time domain locations of the M first modulated symbols and the time domain locations of the N CPs may be defined in a communication protocol or indicated by a transmitting end. Because intervals between CPs in the wake up signal has an association relationship, the receiving end may determine time domain locations of all CPs in the wake up signal by determining the time domain locations of the N CPs in the synchronization signal, to demodulate the wake up signal. Because a modulated symbol of the wake up signal is a non-OFDM symbol, precise time-frequency synchronization and complex signal processing do not need to be performed for demodulating the non-OFDM symbol, so that power consumption of the low power link of the receiving end can be reduced.

Optionally, a start location of the M first modulated symbols is an end location of a first CP in the N CPs.

In this implementation, a location relationship between the start location of the M first modulated symbols and the end location of the first CP is fixed. After determining the time domain locations of the M first modulated symbols, the receiving end may determine a time domain location of the first CP based on the location relationship, and does not need to determine a distance between the start location of the M first modulated symbols and the end location of the first CP, reducing complexity of determining the time domain locations of the N CPs.

Optionally, N is a positive integer greater than 1, lengths of the N CPs are different, and the first CP is a CP with a longer length in the N CPs.

In this implementation, the lengths of the N CPs are different. When the start location of the M first modulated symbols is an end location of a long CP, the receiving end can determine accurate locations of the N CPs without using other information.

Optionally, the first CP is any one of the N CPs.

In this implementation, the start location of the M first modulated symbols may be an end location of any CP, and a manner of sending the synchronization signal is more flexible. In a multi-cell communication scenario, to avoid interference between neighboring cells, synchronization signals of the neighboring cells may need to be sent at different time domain locations. Therefore, this implementation can resolve a problem of interference between the synchronization signals of the neighboring cells.

Optionally, before the sending the synchronization signal, the method further includes: sending first information, where the first information indicates that the start location of the M first modulated symbols is the end location of the first CP.

A location relationship between the M first modulated symbols and the first CP is indicated by using the first information, and the location relationship between the M first modulated symbols and the first CP may be flexibly set based on different communication scenarios.

Optionally, a start location of the M first modulated symbols is a preset location between any two adjacent CPs in the N CPs, where N is a positive integer greater than 1.

In this implementation, the M first modulated symbols are the preset location between any two adjacent CPs in the N CPs, and a manner of sending the synchronization signal is more flexible.

Optionally, before the sending the synchronization signal, the method further includes: sending second information, where the second information indicates that the start location of the M first modulated symbols is the preset location between any two adjacent CPs in the N CPs.

A location relationship between the M first modulated symbols and the first CP is indicated by using the second information, and the location relationship between the M first modulated symbols and the first CP may be flexibly set based on different communication scenarios.

Optionally, in the N CPs, every two adjacent CPs are separated by m first modulated symbols, where N is a positive integer greater than 1, and m is a positive integer.

In this implementation, the relationship between the time domain locations of the M first modulated symbols and the time domain locations of the N CPs is fixed. After determining the time domain locations of the M first modulated symbols, the receiving end may determine the time domain locations of the N CPs based on the location relationship, and does not need to determine a distance between the start location of the M first modulated symbols and the end location of the first CP, reducing complexity of determining the time domain locations of the N CPs.

Optionally, before the sending the synchronization signal, the method further includes: sending third information, where the third information indicates an OFDM symbol index, and the OFDM symbol index is used by the receiving end of the synchronization signal to determine the time domain locations of the N CPs.

The third information indicates the OFDM symbol index, so that a location relationship between the M first modulated symbols and the first CP may be flexibly set.

Optionally, before the sending the synchronization signal, the method further includes: sending fourth information, where the fourth information indicates a location of a start location of a plurality of first modulated symbols in an OFDM symbol corresponding to the OFDM symbol index.

In some cases, the location relationship between the start location of the M first modulated symbols and the end location of the first CP is not fixed. In this case, in addition to the OFDM symbol index corresponding to the start location of the M first modulated symbols, the receiving end further needs to know a specific location of the start location of the M first modulated symbols in the OFDM symbol corresponding to the OFDM index. In this implementation, the receiving end may determine the location relationship between the start location of the M first modulated symbols and the end location of the first CP when the location relationship is not fixed.

Optionally, a correspondence exists between the start location of the M first modulated symbols and a synchronization sequence carried in the synchronization signal.

After determining the synchronization sequence, the receiving end may determine the start location of the M first modulated symbols based on the correspondence, and the transmitting end does not need to separately send indication information, to reduce signaling overheads.

Optionally, the first modulated symbol is an FSK symbol, an ASK symbol, or an OOK symbol.

According to a third aspect, an apparatus for demodulating a signal is provided. The apparatus may be a communication device (for example, a terminal device or a network device), or may be a chip in the communication device. The apparatus may include a processing unit and a transceiver unit. When the apparatus is the communication device, the processing unit may be a processor, and the transceiver unit may be a transceiver. The communication device may further include a storage unit, and the storage unit may be a memory. The storage unit is configured to store instructions, and the processing unit is configured to execute the instructions stored in the storage unit, to cause the communication device to perform the method in any one of the first aspect and the optional implementations of the first aspect. When the apparatus is the chip in the communication device, the processing unit may be a processor, and the transceiver unit may be an input/output interface, a pin, a circuit, or the like. The processing unit is configured to execute instructions stored in a storage unit, to cause the communication device to perform the method in any one of the first aspect and the optional implementations of the first aspect. The storage unit may be a storage unit (such as a register or a cache) inside the chip, or may be a storage unit (such as a read-only memory or a random access memory) that is in the communication device and that is located outside the chip.

According to a fourth aspect, an apparatus for sending a synchronization signal is provided. The apparatus may be a communication device (for example, a terminal device or a network device), or may be a chip in the communication device. The apparatus may include a processing unit and a transceiver unit. When the apparatus is the communication device, the processing unit may be a processor, and the transceiver unit may be a transceiver. The communication device may further include a storage unit, and the storage unit may be a memory. The storage unit is configured to store instructions, and the processing unit is configured to execute the instructions stored in the storage unit, to cause the communication device to perform the method in any one of the second aspect and the optional implementations of the second aspect. When the apparatus is the chip in the communication device, the processing unit may be a processor, and the transceiver unit may be an input/output interface, a pin, a circuit, or the like. The processing unit is configured to execute instructions stored in a storage unit, to cause the communication device to perform the method in any one of the second aspect and the optional implementations of the second aspect. The storage unit may be a storage unit (such as a register or a cache) inside the chip, or may be a storage unit (such as a read-only memory or a random access memory) that is in the communication device and that is located outside the chip.

According to a fifth aspect, a computer-readable storage medium is provided. The computer-readable storage medium stores a computer program, and when the computer program is executed on a computer, the computer is caused to perform the method in any one of the first aspect and the optional implementations of the first aspect.

According to a sixth aspect, a computer-readable storage medium is provided. The computer-readable storage medium stores a computer program, and when the computer program is executed on a computer, the computer is caused to perform the method in any one of the second aspect and the optional implementations of the second aspect.

According to a seventh aspect, a computer program product is provided. The computer program product includes computer program code. When the computer program code is run by an apparatus for demodulating a signal, the apparatus is caused to perform the method in any one of the first aspect and the optional implementations of the first aspect.

According to an eighth aspect, a computer program product is provided. The computer program product includes computer program code. When the computer program code is run by an apparatus for sending a synchronization signal, the apparatus is caused to perform the method in any one of the second aspect and the optional implementations of the second aspect.

### BRIEF DESCRIPTION OF DRAWINGS

FIG. 1 is a diagram of a communication system according to this application;
FIG. 2 is a diagram of a receiver architecture according to this application;
FIG. 3 shows an operating procedure of a main link and a wake up link according to this application;
FIG. 4 is a diagram of an NRZ waveform according to this application;
FIG. 5 is a diagram of an OOK waveform according to this application;
FIG. 6 is a diagram of an ASK waveform according to this application;
FIG. 7 is a diagram of an FSK modulation scheme according to this application;
FIG. 8 is a diagram of another FSK modulation scheme according to this application;
FIG. 9 is a diagram of an OFDM signal transmission and receiving procedure according to this application;
FIG. 10 is a diagram of sending an OOK signal by using an OFDM transmitter according to this application;
FIG. 11 is another diagram of sending an OOK signal by using an OFDM transmitter according to this application;
FIG. 12 is a diagram of sending an FSK signal by using an OFDM transmitter according to this application;
FIG. 13 is a diagram of a time domain location relationship between a slot and a CP according to this application;
FIG. 14 is a diagram of a method for sending a synchronization signal and demodulating a signal according to this application;
FIG. 15 is a diagram of a method of a sliding correlation operation according to this application;
FIG. 16 is a diagram of another method of a sliding correlation operation according to this application;
FIG. 17 is a diagram of a correlation peak according to this application;
FIG. 18 is a diagram of a location relationship between M first modulated symbols and N CPs according to this application;
FIG. 19 is a diagram of another location relationship between M first modulated symbols and N CPs according to this application;
FIG. 20 is a diagram of still another location relationship between M first modulated symbols and N CPs according to this application;
FIG. 21 is a diagram of an apparatus for demodulating a signal according to this application;
FIG. 22 is a diagram of an apparatus for sending a synchronization signal according to this application;
FIG. 23 is a diagram of a terminal device according to this application; and
FIG. 24 is a diagram of a network device according to this application.

### DESCRIPTION OF EMBODIMENTS

The following describes technical solutions of this application with reference to the accompanying drawings.

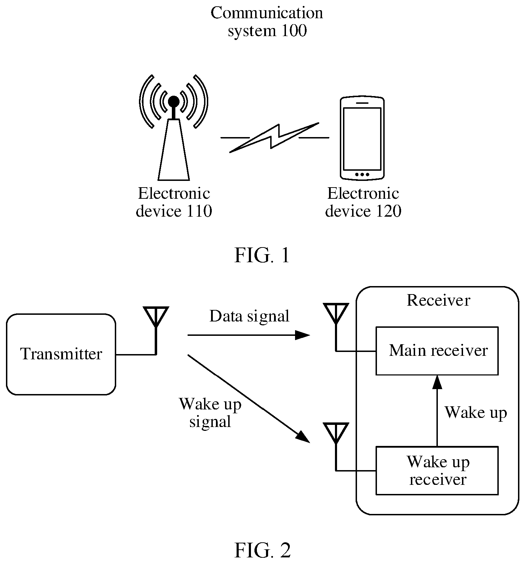

FIG. 1 shows a communication system 100 applicable to this application. The communication system 100 includes an electronic device 110 and an electronic device 120. The electronic device 110 communicates with the electronic device 120 via a wireless network.

The communication system 100 may be a communication system in a 3^{rd} generation partnership project (3^{rd} generation partnership project, 3GPP), for example, a wideband code division multiple access (wideband code division multiple access, WCDMA) system, a general packet radio service (general packet radio service, GPRS) system, a long term evolution (long term evolution, LTE) system, a frequency division duplex (frequency division duplex, FDD) system, a time division duplex (time division duplex, TDD) system, or a new radio (new radio, NR) system. The NR system in this application includes a non-standalone (non-standalone, NSA) 5G mobile communication system and/or a standalone (standalone, SA) 5G mobile communication system. The technical solutions provided in this application may be further applied to a future communication system or a communication system other than the 3GPP. The communication system other than the 3GPP is, for example, a short-distance wireless system such as a wireless fidelity (wireless fidelity, Wi-Fi) system and a Bluetooth system.

In the communication system 100, the electronic device 110 is a transmitting end, and the electronic device 120 is a receiving end. The transmitting end may be a network device or a terminal device, and the receiving end may be a terminal device.

The network device may be a NodeB (NodeB) in the WCDMA system, an evolved NodeB (evolved NodeB, eNB) in the LTE system, a next generation NodeB (next generation NodeB, gNB) in the NR system, or an access point (access point, AP) in the Wi-Fi system. Alternatively, the network device may be a relay station, an access point, a vehicle-mounted device, a wearable device, or an access network device in a future evolved public land mobile network (public land mobile network, PLMN) that functions as a base station. A specific type of the network device is not limited in embodiments of this application.

The terminal device may be user equipment (user equipment, UE) or a station (station, STA) having a wireless communication function, such as a mobile phone, a tablet computer, a wearable electronic device, a vehicle-mounted electronic device, an augmented reality (augmented reality, AR) device, a virtual reality (virtual reality, VR) device, a notebook computer, an ultra-mobile personal computer (ultra-mobile personal computer, UMPC), a netbook, or a personal digital assistant (personal digital assistant, PDA). Alternatively, the terminal device may be a wireless sensor in an industrial internet. A specific type of the terminal device is not limited in embodiments of this application.

A link between the electronic device 110 and the electronic device 120 may be a main link of the communication system 100, or may be a sidelink (sidelink) of the communication system 100.

The foregoing communication system 100 is merely an example for description, and a communication system applicable to this application is not limited thereto.

For ease of understanding of this application, before a method provided in this application is described, concepts in this application are briefly described first.

### 1. Main link and a wake up link.

In the field of wireless communication, power saving of a terminal device is an important indicator. To save energy, the terminal device is in different operating modes in different service scenarios. Usually, when the terminal device needs to receive and send data, the terminal device operates in a connected mode (connected mode). In this case, the terminal device and a network device perform procedures such as signaling exchange and data receiving and sending. When the terminal device does not need to receive and send data, the terminal device operates in an idle mode (idle mode). In this case, a transceiver circuit of the terminal device enters a sleep state, and periodically wakes up, to detect whether there is data to be sent to the terminal device. If there is data to be sent to the terminal device, the terminal device enters the connected mode; otherwise, the terminal device remains in the idle mode and continues sleeping. Power consumption of the terminal device in the idle mode is lower than power consumption of the terminal device in the connected mode. In addition, even if the terminal device operates in the connected mode (connected mode), a case in which no service data needs to be sent or received in some time may occur. In this case, the terminal device may enter a micro sleep (micro sleep) mode. When the terminal device is in the micro sleep state, once service data needs to be sent and received, the terminal device enters an operating (active) mode again. Power consumption in the micro sleep state is lower than power consumption in the operating mode.

Usually, a terminal device is in the idle mode for longer time than in the connected mode. For example, if a user uses a mobile phone for four hours in a day, the mobile phone is in the connected mode for four hours, and the mobile phone is in the idle mode in the other 20 hours. Therefore, in the idle mode, power consumption of the terminal device greatly affects use time of the terminal device. Similarly, even in the connected mode, the terminal device is in the micro sleep state in a large proportion of time. Therefore, the power consumption in the micro sleep state also affects the use time of the terminal device.

In recent years, a new receiver architecture attracts wide attention, so that power consumption can be reduced to the fullest extent when the terminal device is in the micro sleep state in the idle mode and the connected mode. This architecture is shown in FIG. 2. A receiver is divided into a main receiver and a wake up receiver. A communication link between the main receiver and a transmitter is referred to as a main link, and a link between the wake up receiver and the transmitter is referred to as a wake up link. The main link has high transmission efficiency but high power consumption, and is used to receive a data signal. The wake up link has low transmission efficiency but low power consumption, and is used to receive a wake up signal and wake up the main link. The terminal usually enables the main link when data needs to be sent or received, and enables the wake up link when no data needs to be sent or received.

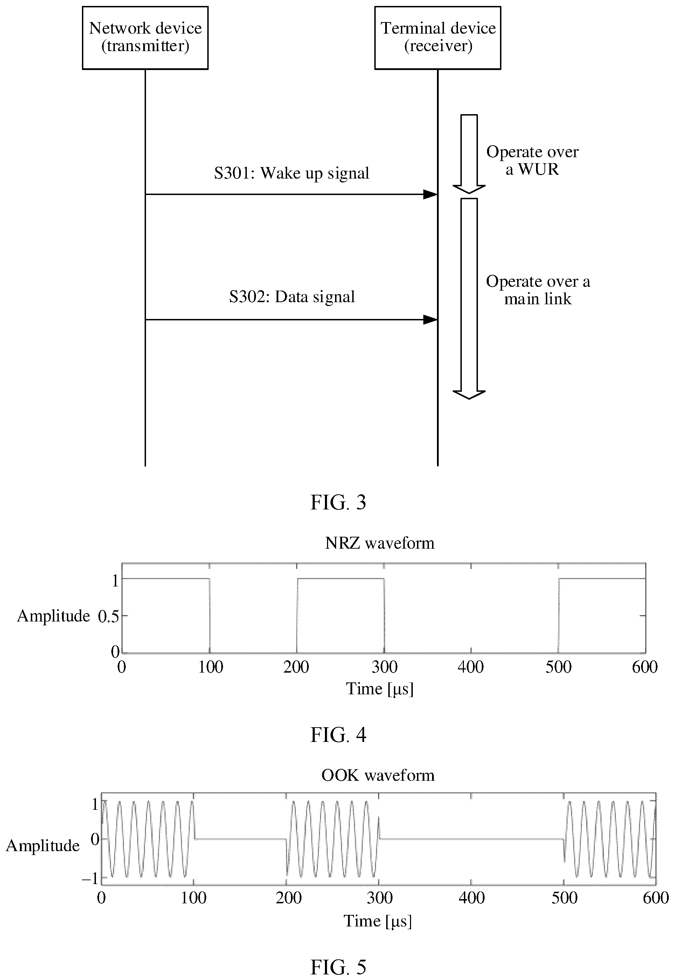

An operating procedure of the main link and the wake up link is shown in FIG. 3.

S301: The terminal device receives a wake up signal.

The terminal device is currently in the idle mode or in the micro sleep state in the connected mode, and the wake up link operates but the main link does not operate. When the network device needs to send data to the terminal device, the network device sends the wake up signal to the terminal device via the transmitter. After receiving the wake up signal, the wake up link of the terminal device triggers the terminal device to enable the main link, so that the terminal device enters the connected mode, or enters the operating mode from the micro sleep state in the connected mode.

S302: The terminal device receives a data signal.

After entering the connected mode, the main link is enabled, and the terminal device receives, from the network device over the main link, the data signal that carries service data.

Because the terminal device operates in the idle mode or the micro sleep state in the connected mode most of time, the wake up link operates most of the time. Therefore, a receiving architecture of the main link and the wake up link can significantly reduce the power consumption of the terminal device.

### 2. Modulation scheme

A design objective of a modulation scheme of a wireless communication system is usually to pursue higher spectral efficiency, overcome a complex wireless communication environment, and so on. For example, OFDM is a currently widely used modulation scheme, and the OFDM modulation scheme is used in all of an LTE system, an NR system, and a Wi-Fi system. However, for a receiver, demodulation of an OFDM signal requires complex processing, and is not an optimal choice from a perspective of power saving.

To implement low power consumption of a wake up link, a modulation scheme of a WUR signal also pursues low complexity, so that a WUR receiver can demodulate the WUR signal with very low power. For example, an OOK modulation scheme, an ASK modulation scheme, and an FSK modulation scheme are applied to WUR links of some systems. An OOK signal, an ASK signal, and an FSK signal can be demodulated via only a receiver with very low complexity. Therefore, an objective of low power consumption of the WUR link can be achieved.

### 2.1. OOK modulation

OOK is a simple modulation scheme. In this modulation scheme, whether a signal is sent is used to transfer information.

Specifically, first, a baseband waveform is generated by using an on-off non-return-to-zero (ON-OFF non-return-to-zero, ON-OFF NRZ) line code (line code) based on information that needs to be modulated, as shown in an NRZ waveform in FIG. 4, where a high electrical level represents an information bit '1', and a zero electrical level represents an information bit '0'.

The NRZ waveform may be expressed as *s_{nrz}* (*t*) , and then the OOK signal is generated by multiplying a carrier signal with *s_{nrz}*(*t*). Assuming that a carrier frequency for sending a signal is *f_{c}* the carrier signal may be represented as cos(2π *f_{c}t*+*ϕ*₀), where *ϕ*₀ is an initial phase of the carrier frequency. In this case, the generated OOK signal may be represented as *s_{OOK}* (*t*) = *s_{nrz}*(*t*)cos(2*πf_{c}t+ϕ*₀).

For a waveform of the OOK signal, refer to an OOK waveform in FIG. 5. This type of modulation may be understood as that the carrier signal is sent when information that needs to be sent is "1", and no signal is sent when the information that needs to be sent is "0".

At a receiving end, the receiver only needs to use a threshold to determine whether energy of a symbol exceeds the threshold, and then determine whether the sent signal is '0' or '1', to complete demodulation.

An OOK receiver may be implemented by using a low complexity and low power component, and therefore is applicable to some devices that require low costs and low power consumption, for example, an internet of things device or a sensor.

### 2.2. ASK modulation

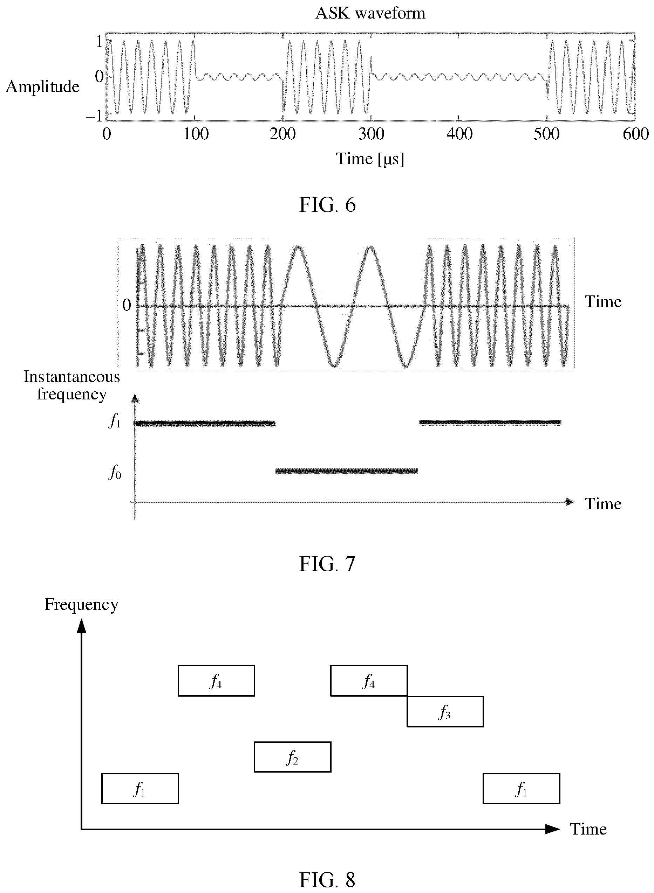

The ASK modulation is similar to the OOK modulation. In comparison with the OOK, on a symbol on which "OFF" is sent, in ASK, a low energy signal (not 0) is sent, as shown in FIG. 6. In this application, the OOK is used as an example for description. It may be understood that the solution described in this application may be directly applied to the embodiment of the ASK modulation.

### 2.3. FSK modulation

FSK is a modulation technology commonly used in wireless communication, and is used in many communication systems, such as global system for mobile communications (global system for mobile communications, GSM) and Bluetooth (Bluetooth). The FSK is usually used in a narrow-bandwidth and low-rate communication system (where a communication rate is usually lower than 1 Mbps).

In the FSK, information that needs to be sent is carried in a frequency for sending a signal. As shown in FIG. 7, an upper part shows an example FSK waveform. It can be learned that the waveform is similar to a cosine function, but uses a different frequency. A lower part of FIG. 7 shows a change of an instantaneous frequency of a signal with time. It can be learned that a higher frequency *f*₁ is used on a 1^{st} symbol and a 3^{rd} symbol, and a lower frequency *f*₀ is used on a 2^{nd} symbol.

Assuming that an information bit that needs to be transmitted is a sequence including 0 and 1, sending a signal whose frequency is *f*₀ represents that '0' is transmitted. Sending a signal whose frequency is *f*₁ represents that '1' is transmitted. Therefore, sending a signal on an n^{th} FSK symbol may be represented as *sₙ*(*t*) = cos(2*πfᵢt*+ *φₙ*) and (*n* -1) · *T_{sym}* ≤ *t ≤ n · T_{sym}*, where *T_{sym}* is duration of the FSK symbol, and *φₙ* is an initial phase of a 0^{th} FSK symbol.

The FSK may increase a transmission rate by increasing a modulation order (that is, increasing a quantity of candidate frequencies). An amount of information carried by each FSK symbol is log₂ *M* bits, where *M* is the modulation order, that is, the quantity of candidate frequencies. For example, if a modulation order (*M*) of 4-FSK is 4, a frequency may be selected from four candidate frequencies. In this way, each symbol carries log₂ 4 = 2 -bit information, and each symbol of 8-FSK may carry log₂ 8 = 3-bit information.

FIG. 8 is a diagram of the 4-FSK. There are four candidate frequencies, namely, *f*₁, *f*₂, *f*₃, and *f*₄. One of the frequencies is selected to generate an FSK signal based on information that needs to be sent. For example, if the information that needs to be sent is 001101111000, every two information bits form a group, and a required sending frequency is determined based on an "information-frequency" mapping relationship shown in Table 1. Herein, if 1^{st} and 2^{nd} information bits are "00", the frequency *f*₁ is determined to be used based on the mapping relationship, and if 3^{rd} and 4^{th} information bits are "11", the frequency *f*₄ is determined to be used; and so on. The FSK signal is generated and sent based on a determined frequency.

**Table 1**

| Information bit | Frequency |
|---|---|
| 00 | *f*₁ |
| 01 | *f*₂ |
| 10 | *f*₃ |
| 11 | *f*₄ |

Advantages of the FSK modulation scheme include a strong anti-noise capability, a constant envelope, and the like. In particular, an FSK receiver has advantages of low costs and low power consumption. For example, the receiver may use a simple frequency discrimination circuit to detect a frequency of a received signal to complete demodulation. Such a frequency discrimination circuit usually has very low costs and very low power consumption, and is very suitable for some low-rate service terminal devices, for example, an internet of things device.

### 2.4. OFDM modulation

OFDM is a widely used modulation scheme. For example, the OFDM modulation scheme is used in all of an LTE system, an NR system, and a Wi-Fi system. The OFDM is usually applied to a mobile broadband system, to provide a high transmission rate by using a higher communication bandwidth. In most deployment scenarios, the OFDM may provide a transmission rate of at least 1 Mbps.

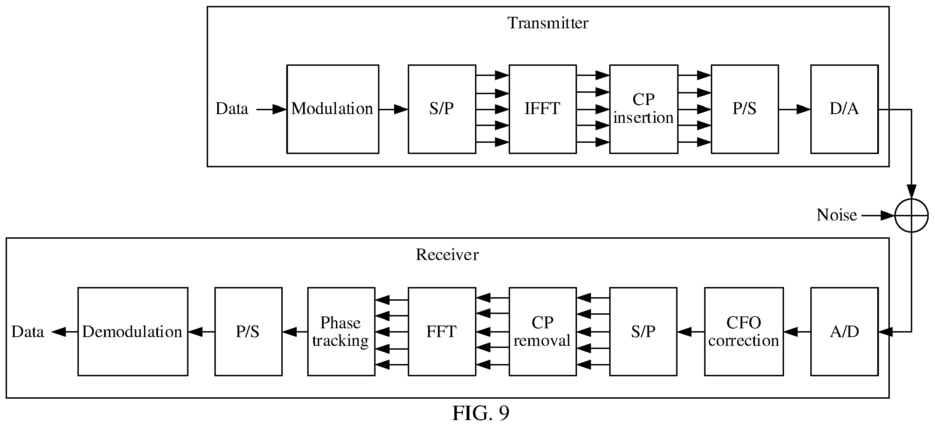

In the OFDM modulation scheme, a system bandwidth is divided into a plurality of parallel subcarriers, and data is modulated and sent on each subcarrier. Each subcarrier has a different frequency. A procedure of transmitting and receiving an OFDM signal is shown in FIG. 9. Data that needs to be transmitted is first modulated and mapped into a complex-valued symbol, where the complex-valued symbol may be written as *ae^{jφ},* where a is an amplitude of the symbol, and *φ* is a phase of the symbol. Optionally, subcarrier modulation uses a quadrature amplitude modulation (quadrature amplitude modulation, QAM) mapping manner to map information to a QAM symbol (where the QAM symbol is also a complex-valued symbol). Then, through serial/parallel conversion (serial/parallel conversion, S/P), QAM symbols are mapped to different subcarriers. An inverse fast Fourier transform (inverse fast Fourier transform, IFFT) operation is performed on symbols on different subcarriers to convert the symbols into a time domain sequence.

In conventional OFDM symbol processing, a transmitter replicates a tail part of the time domain sequence to a front end of the time domain sequence, where the part is referred to as a CP, and this process is referred to as CP insertion. A main function of the CP is to counteract a multipath transmission delay in a wireless channel. After the cyclic prefix is added, the transmitter performs parallel/serial conversion (parallel/serial conversion, P/S) and digital-to-analog conversion (digital-to-analog conversion, D/A) on the signal, performs up-conversion processing, and then transmits the signal.

Noise is added to a radio signal during transmission. The receiver sequentially performs analog-to-digital conversion (analog-to-digital conversion, A/D), carrier frequency offset (carrier frequency offset, CFO) correction, serial/parallel conversion, CP removal, fast Fourier transform (fast Fourier transform, FFT) operation, phase tracking, parallel/serial conversion, and demodulation on the received radio signal to restore data carried in the signal.

### 3. An OFDM transmitter is used to send an OOK signal.

In recent years, services provided by a cellular network tend to be diversified. Many terminal devices have a low requirement on a communication rate, but have a high requirement on control of receiver costs and power consumption. For example, an internet of things device, a wearable device, or a low power wake up link (low power wake up radio, LP-WUR). For these devices, the OFDM is not a suitable modulation scheme because an OFDM receiver needs to perform precise time-frequency synchronization and complex signal processing, and needs high costs and power consumption. These devices are more suitable for simple modulation schemes. For example, OOK is an ideal choice.

To serve different types of terminal devices, a direct practice is as follows: Two transmitters may be disposed on a base station of a mobile communication network. One transmitter is used to send an OFDM signal to serve a mobile broadband user, and the other transmitter is used to send an OOK signal to serve a low-rate user. However, in this practice, hardware of an existing network device needs to be upgraded. To be specific, an OOK transmitter is added based on an existing OFDM transmitter. This causes great costs to a network deployer.

A practice used in this application is as follows: A transmitter still uses an existing OFDM transmitter structure but waveforms that conform to another modulation scheme are generated in some frequency bands through some signal processing means. For example, the OFDM transmitter may generate an OOK modulation waveform in some frequency bands.

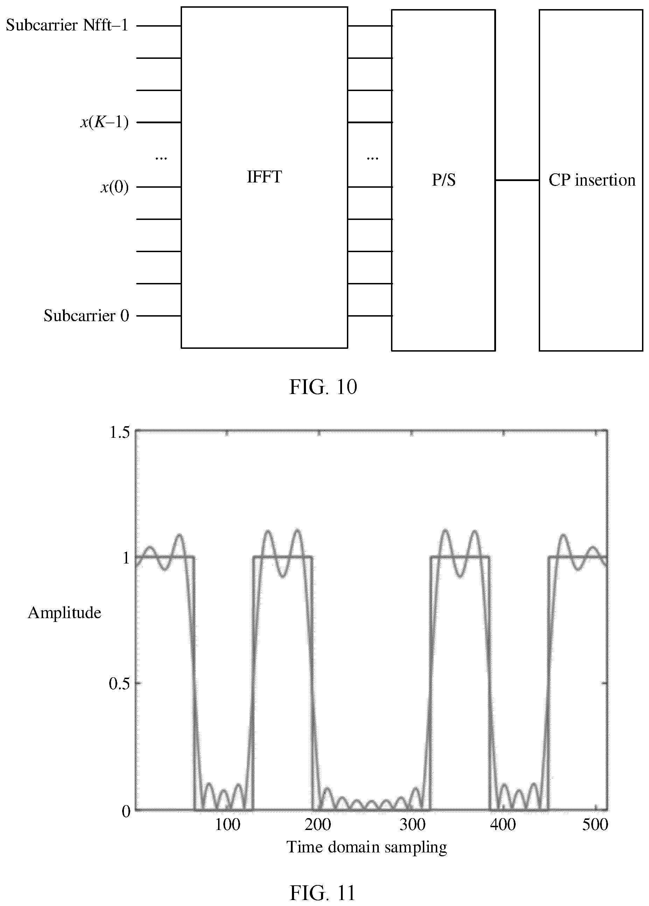

As shown in FIG. 10, an OFDM transmitter can generate an OFDM signal by using *N_{IFFT}* subcarriers, and may generate an OOK signal by using K subcarriers (x(0) to x(K-1)) in the subcarriers. Signals that need to be modulated on the K subcarriers may be determined through pre-calculation based on waveforms of OOK signals that are expected to be generated. In this way, after an IFFT operation is performed on these signals, time domain waveforms of generated OFDM symbols are approximately equal to a waveform of an OOK signal that needs to be sent.

For example, *N_{IFFT}* = 512, K = 32, and a to-be-sent OOK waveform is " ON | OFF | ON | OFF | OFF | ON | OFF | ON", that is, a square waveform in FIG. 11. Signals that need to be modulated on the allocated subcarriers and that are obtained through pre-operation are *x* = [*x*₀, *x*₁,....,*x*_{*K*-1}]. In this way, when the OFDM signal is modulated, other data is modulated on other subcarriers, and *x* = [*x*₀*, x*₁,.... , *x*_{*K*-1}] is sent on the allocated 32 subcarriers. If the receiving end filters out 32 subcarriers via a filter, an amplitude of an obtained signal is close to the OOK waveform, as shown by a curve waveform in FIG. 11. It can be learned that, although the obtained signal is not as regular as an ideal square wave signal, a high-amplitude signal may be formed on an ON part, and a low-amplitude signal may be formed on an OFF part. In this way, the receiving end can still correctly demodulate the signal.

According to the foregoing method, the OOK signal may be generated by using the OFDM transmitter. In addition, it should be noted that the OFDM transmitter may send one or more OOK signals in duration of one OFDM symbol. As shown in FIG. 11, the OFDM transmitter sends eight OOK symbols "ON | OFF | ON | OFF | OFF | ON | OFF | ON" in the duration of one OFDM symbol.

### 4. An OFDM transmitter is used to send an FSK signal.

The OFDM transmitter is used to send an OOK signal, and may also be used to send the FSK signal. Two or more candidate FSK frequency bands may be set, and one frequency band is selected each time to send a modulated signal based on information that needs to be sent, that is, the FSK signal may be formed.

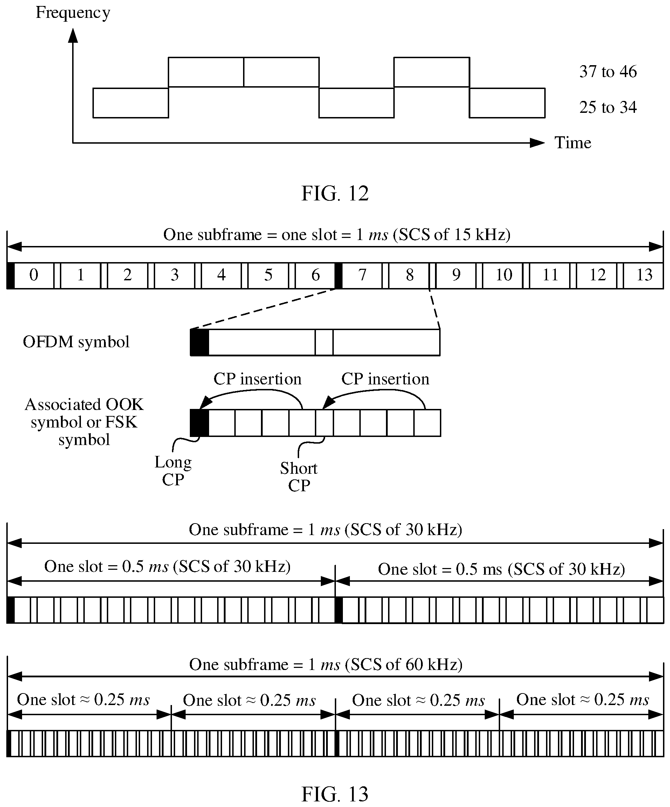

As shown in FIG. 12, the FSK signal herein has two candidate frequency bands, which are subcarriers {25 to 34} and subcarriers {37 to 46} respectively. A candidate frequency band in which a signal needs to be sent is determined based on the information that needs to be sent. For example, the information that needs to be sent is 011010. In this way, if 0 needs to be sent, the candidate subcarriers {25 to 34} are used; or if 1 needs to be sent, the candidate subcarriers {37 to 46} are used.

In this way, each candidate frequency band may be considered as a string of OOK signals. For example, signals corresponding to the subcarriers {25 to 34} are {ON | OFF | OFF | ON | OFF | ON}, and signals corresponding to the subcarriers {37 to 46} are {OFF | ON | ON | OFF | ON | OFF}. In addition, a quantity of symbols that need to be sent for each OFDM symbol is determined. For example, in this example, the quantity of symbols is 2. In this way, according to the manners described in FIG. 10 and FIG. 11, a corresponding OOK signal is generated in each subcarrier frequency band, and the FSK signal is generated after OOK signals are synthesized.

Therefore, the FSK signal may also be generated by using the OFDM transmitter, and one or more FSK symbols may be formed in one OFDM symbol.

### 5. Subframe, slot, and CP

A time domain in some wireless communication systems (for example, an NR system) is divided into subframes and slots (slot). Duration of each subframe is 1 ms, each subframe is divided into an integer quantity of slots, each slot includes a plurality of OFDM symbols (usually 14 OFDM symbols), and a CP needs to be added before each OFDM symbol. In addition, subcarrier frequency spacings of OFDM symbols in some wireless communication systems (for example, the NR system) may be set to different values, for example, 15 kHz, 30 kHz, and 60 kHz.

In the NR system, CP lengths of different OFDM symbols in a subframe are also different. As shown in FIG. 13, when the subcarrier spacing (subcarrier spacing, SCS) is 15 kHz, one subframe is one slot, a length of one slot may be 1 ms, and the slot is divided into 14 OFDM symbols. CP lengths of OFDM symbols whose indexes are 0 and 7 are greater than CP lengths of other OFDM symbols. CPs of the OFDM symbols whose indexes are 0 and 7 are referred to as "long CPs", and a CP of another OFDM symbol is referred to as a "short CP".

When the subcarrier spacing (subcarrier spacing, SCS) is 30 kHz, one subframe is divided into two slots, a length of one slot may be 0.5 ms, and each slot is divided into 14 OFDM symbols. A CP length of an OFDM symbol whose index is 0 is greater than a CP length of another OFDM symbol. A CP of the OFDM symbol whose index is 0 is referred to as a "long CP", and a CP of another OFDM symbol is referred to as a "short CP".

When the subcarrier spacing (subcarrier spacing, SCS) is 60 kHz, one subframe is divided into four slots, a length of one slot may be 0.25 ms, and each slot is divided into 14 OFDM symbols. In one subframe, in slots whose indexes are 0 and 2, a CP length of an OFDM symbol whose index is 0 is greater than a CP length of another OFDM symbol. CPs of these OFDM symbols are referred to as "long CPs", and a CP of another OFDM symbol is referred to as a "short CP".

If an OFDM transmitter is used to generate an OOK or FSK signal, duration of an OFDM symbol corresponds to a plurality of OOK or FSK symbols, and an adjacent CP before each OOK/FSK symbol group is obtained by replicating a part of a sequence of a last OOK/FSK symbol in the OOK/FSK symbol group.

As described above, the transmitting end usually sends the wake up signal via the transmitter of the main link. The transmitter of the main link is usually a transmitter with high spectral efficiency, for example, the OFDM transmitter. The transmitting end may generate the OOK or FSK signal by using the OFDM transmitter. When generating the OFDM signal, the OFDM transmitter needs to add one or more CP sequences. A signal generated in this manner is not a continuous OOK signal or FSK signal, but a CP signal appears at intervals, and the CP signal does not belong to the OOK signal or the FSK signal. Therefore, after receiving the OOK and FSK signals generated by the OFDM transmitter, the receiver needs to determine a location of the CP signal, and perform corresponding processing (for example, discarding the CP signal), to avoid a demodulation error.

However, the OOK receiver or the FSK receiver usually does not have a function of determining the location of the CP signal, and a manner of demodulating a signal by the OOK receiver or the FSK receiver needs to be improved.

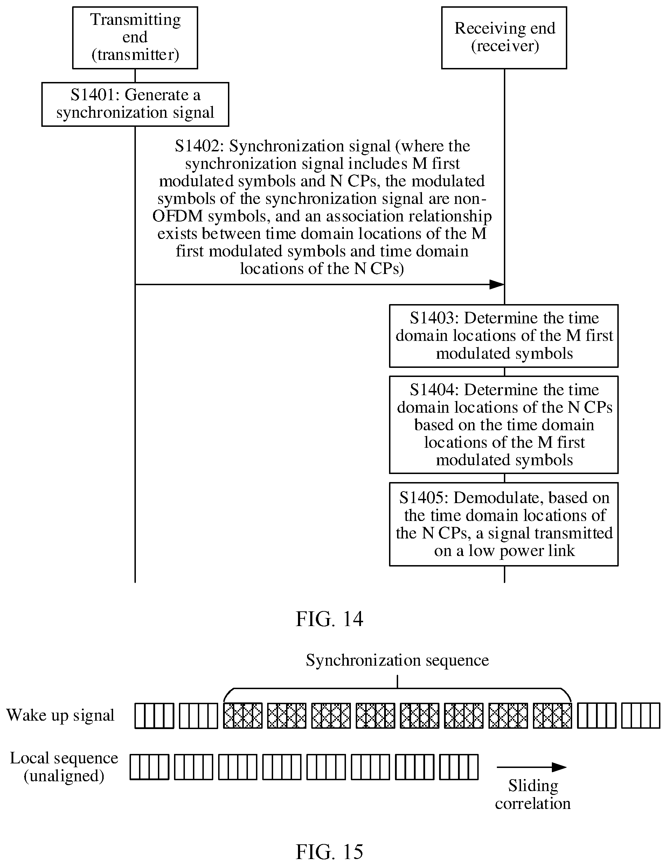

FIG. 14 shows a method for sending a synchronization signal and demodulating a signal according to this application. The method includes the following content.

S1401: A transmitting end generates and sends a synchronization signal.

The synchronization signal includes M first modulated symbols and N CPs, the modulated symbols of the synchronization signal are non-OFDM symbols, and an association relationship exists between time domain locations of the M first modulated symbols and time domain locations of the N CPs, where M is a positive integer greater than 1, and N is a positive integer.

The transmitting end may generate and send the synchronization signal according to the method shown in FIG. 9. Details are not described herein again.

S1402: Receive the synchronization signal over a low power link in at least two communication links.

The low power link may be a WUR or an LP-WUR, and the first modulated symbol may be an FSK symbol, an ASK symbol, or an OOK symbol. The synchronization signal is used for time synchronization between a receiver of the low power link and a transmitter, and a synchronization sequence is carried on the M first modulated symbols. A receiving end receives the synchronization signal by using a non-OFDM receiver.

It should be noted that, in this application, terms such as "first" and "second" are used to distinguish between individuals with different functions in objects of a same type. For example, "first information" and "second information" represent two pieces of information with different functions. The two pieces of information may be carried by two different bits, or may be carried by a same bit. There is no other limitation.

S1403: Determine the time domain locations of the M first modulated symbols.

Optionally, the receiving end may determine the time domain locations of the M first modulated symbols based on a plurality of local sequences and the synchronization sequence carried in the synchronization signal. The plurality of local sequences include a target sequence, and the target sequence is a sequence that is the same as the synchronization sequence.

As shown in FIG. 15, after receiving a wake up signal, the receiving end samples the wake up signal to obtain a sampling sequence. The sampling sequence corresponds to the synchronization sequence. The receiving end may sequentially use the plurality of local sequences and a sequence in the wake up signal to perform a sliding correlation operation, and a sliding step may be one or more sampling points.

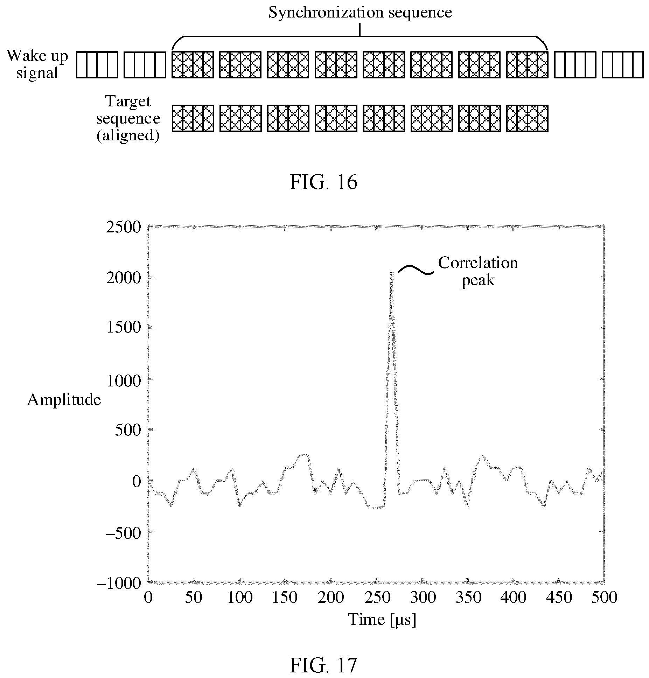

For example, for a local sequence ABCD, the sequence on which the correlation operation is performed in the wake up signal is EFGH, and a result of a correlation operation between the sequence and the local sequence is A×E+B×F+C×G+D×H. Then, the receiving end performs sliding shift processing on the sequence in the wake up signal to obtain a sequence FGHI, and a result of a correlation operation between the sequence and the local sequence is A×F+B×G+C×H+D×I. If the synchronization sequence is ABCD, a maximum value definitely exists in a plurality of results obtained through the foregoing sliding correlation operation. As shown in FIG. 16, the target sequence in the local sequence is the same as the synchronization sequence. A correlation operation performed on the target sequence and the synchronization sequence is referred to as alignment of the target sequence with the synchronization sequence in terms of time. In this case, a result of the correlation operation is the maximum value. As shown in a correlation peak in FIG. 17, the receiving end may determine that a time domain location of the synchronization sequence when the correlation peak occurs is the location of the M first modulated symbols.

S1404: Determine the time domain locations of the N CPs based on the time domain locations of the M first modulated symbols.

For example, the receiving end may determine, based on a protocol specification or an indication of the transmitting end, that every two adjacent CPs are separated by m first modulated symbols. In this way, the receiving end may determine the time domain locations of the N CPs based on the time domain locations of the M first modulated symbols, where N is a positive integer greater than 1, and m is a positive integer.

In the foregoing example, a relationship between the time domain locations of the M first modulated symbols and the time domain locations of the N CPs is fixed. After determining the time domain locations of the M first modulated symbols, the receiving end may determine the time domain locations of the N CPs based on the location relationship, and does not need to determine a distance between a start location of the M first modulated symbols and an end location of a first CP, reducing complexity of determining the time domain locations of the N CPs.

The receiving end may further determine the start location of the M first modulated symbols. Because an OFDM transmitter inserts a CP at a fixed location, the time domain locations of the N CPs may be determined after the receiving end determines the start location of the M first modulated symbols.

S1405: Demodulate, based on the time domain locations of the N CPs, a signal transmitted on the low power link.

After determining the time domain locations of the N CPs, the receiving end may demodulate the signal transmitted on the power link, for example, the wake up signal.

In this embodiment, for example, after receiving the wake up signal, the receiving end first performs time synchronization based on the synchronization signal, to determine the time domain locations of the M first modulated symbols of the synchronization signal. Then, the receiving end determines the time domain locations of the N CPs based on the time domain locations of the M first modulated symbols. The relationship between the time domain locations of the M first modulated symbols and the time domain locations of the N CPs may be defined in a communication protocol or indicated by the transmitting end. Because intervals between CPs in the wake up signal has an association relationship, the receiving end may determine time domain locations of all the CPs in the wake up signal by determining the time domain locations of the N CPs in the synchronization signal, to demodulate the wake up signal. Because a modulated symbol of the wake up signal is a non-OFDM symbol, precise time-frequency synchronization and complex signal processing do not need to be performed for demodulating the non-OFDM symbol, so that power consumption of the wake up link can be reduced. In addition, in this embodiment, the OFDM receiver does not need to be used, so that costs of the receiving end are reduced.

There may be a plurality of cases for the location relationship between the M first modulated symbols and the N CPs. Methods for determining the time domain locations of the N CPs by the receiving end in different cases are also different. The following describes the methods for determining the time domain locations of the N CPs by the receiving end in different cases.

Case 1: The start location of the M first modulated symbols is the end location of the first CP in the N CPs, where N is a positive integer greater than or equal to 1, and the first CP is a long CP. The N CPs herein may also be referred to as N time intervals, and the time interval corresponds to a CP of an OFDM symbol.

Case 1 may also be expressed as follows: The synchronization signal sent by the transmitter includes the M first modulated symbols, every X time-consecutive first modulated symbols in the M first modulated symbols form one symbol group, there is one time interval between adjacent modulated symbol groups, and the time interval corresponds to the CP of the OFDM symbol, where X is a positive integer. An adjacent time interval before a 1^{st} modulated symbol group in M first modulated symbol groups corresponds to a long CP.

If a subcarrier spacing of the OFDM transmitter is 15 kHz, a time interval before a 7n^{th} symbol group corresponds to a long CP, where n is 0 or a positive integer, and a time interval before another symbol group corresponds to a short CP.

If a subcarrier spacing of the OFDM transmitter is 30 kHz, a time interval before a 14n^{th} symbol group corresponds to a long CP, where n is 0 or a positive integer, and a time interval before another symbol group corresponds to a short CP.

If a subcarrier spacing of the OFDM transmitter is 60 kHz, a time interval before a 28n^{th} symbol group corresponds to a long CP, where n is 0 or a positive integer, and a time interval before another symbol group corresponds to a short CP.

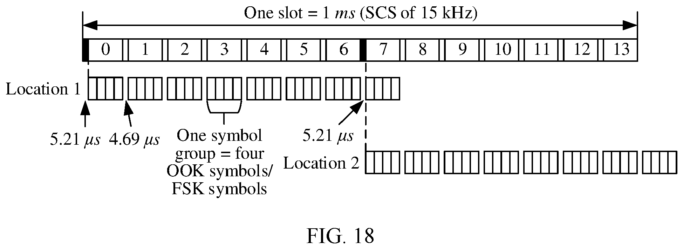

As shown in FIG. 18, a length of a synchronization sequence is 32 OOK/FSK symbols (an example of the M first modulated symbols). These OOK/FSK symbols are generated by the OFDM transmitter at the transmitting end, a subcarrier spacing is 15 kHz, and a time domain location of each OFDM symbol includes four OOK/FSK symbols. Therefore, the synchronization sequence needs to occupy a length of eight OFDM symbols. Four OOK/FSK symbols are included between every two adjacent CPs, and a length of the four OOK/FSK symbols is equal to a length of one OFDM symbol, that is, each symbol group includes four OOK/FSK symbols. One slot includes 14 CPs, and the 14 CPs includes two long CPs and 12 short CPs. A length of the long CP is 5.21 µs, and a length of the short CP is 4.69 µs. According to the foregoing descriptions, there are two time domain locations in one slot meeting a location requirement of the 32 OOK/FSK symbols. The two locations are a location 1 and a location 2 in FIG. 18. At the location 1, a start location of the 32 OOK/FSK symbols is a start location of an OFDM symbol whose index is 0, and a CP adjacent to the start location is a long CP. At the location 2, a start location of the 32 OOK/FSK symbols is a start location of an OFDM symbol whose index is 7, and a CP adjacent to the start location is a long CP.

After determining a location of the synchronization sequence by performing the sliding correlation operation, the receiving end may determine that CPs at a start location of a 1^{st} group of OOK/FSK symbols and a start location of an 8^{th} group of OOK/FSK symbols are long CPs, and a CP adjacent to another group of OOK/FSK symbols is a short CP, to determine a location of each CP in the wake up signal.

In this implementation, a location relationship between the start location of the M first modulated symbols and the end location of the first CP is fixed. After determining the time domain locations of the M first modulated symbols, the receiving end may determine the time domain locations of the N CPs based on the location relationship, and does not need to determine a distance between the start location of the M first modulated symbols and the end location of the first CP, reducing complexity of determining the time domain locations of the N CPs.

Case 2: The start location of the M first modulated symbols is the end location of the first CP in the N CPs, where N is a positive integer greater than or equal to 1, and the first CP may be a long CP or a short CP. The N CPs herein may also be referred to as N time intervals, and the time interval corresponds to a CP of an OFDM symbol.

Case 2 may also be expressed as follows: The synchronization signal sent by the transmitter includes the M first modulated symbols, every X time-consecutive first modulated symbols form one symbol group, there is one time interval between adjacent modulated symbol groups, and the time interval corresponds to the CP of the OFDM symbol, where X is a positive integer. An adjacent time interval before a 1^{st} modulated symbol group in M first modulated symbol groups corresponds to a long CP or a short CP.

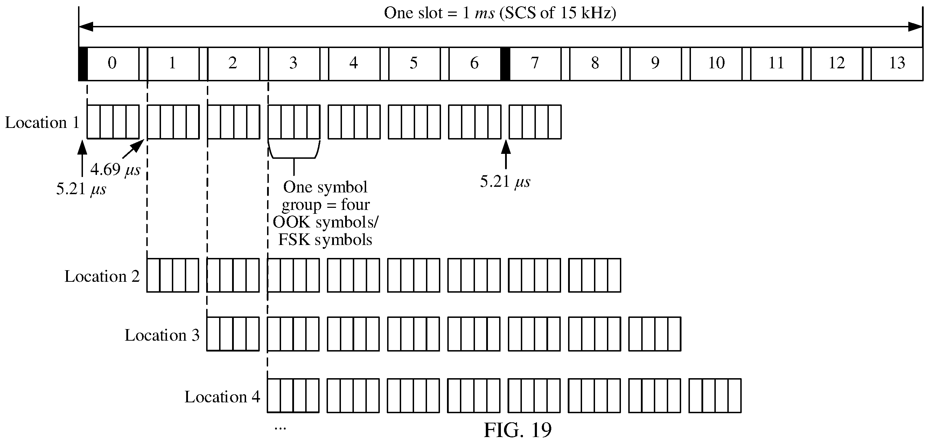

As shown in FIG. 19, a length of a synchronization sequence is 32 OOK/FSK symbols (an example of the M first modulated symbols). These OOK/FSK symbols are generated by the OFDM transmitter at the transmitting end, a subcarrier spacing is 15 kHz, and a time domain location of each OFDM symbol includes four OOK/FSK symbols. Therefore, the synchronization sequence needs to occupy a length of eight OFDM symbols. Four OOK/FSK symbols are included between every two adjacent CPs, that is, each symbol group includes four OOK/FSK symbols, and a length of the four OOK/FSK symbols is equal to a length of one OFDM symbol. One slot includes 14 CPs, and the 14 CPs includes two long CPs and 12 short CPs. A length of the long CP is 5.21 µs, and a length of the short CP is 4.69 µs. According to the foregoing descriptions, there are 14 time domain locations in one slot meeting a location requirement of the 32 OOK/FSK symbols. FIG. 19 shows four of the locations. At a location 1, a start location of the 32 OOK/FSK symbols is a start location of an OFDM symbol whose index is 0, and a CP adjacent to the start location is a long CP. At a location 2, a start location of the 32 OOK/FSK symbols is a start location of an OFDM symbol whose index is 1, and a CP adjacent to the start location is a short CP. At a location 3, a start location of the 32 OOK/FSK symbols is a start location of an OFDM symbol whose index is 2, and a CP adjacent to the start location is a short CP. At a location 4, a start location of the 32 OOK/FSK symbols is a start location of an OFDM symbol whose index is 3, and a CP adjacent to the start location is a short CP.

Because the start location of the 32 OOK/FSK symbols may be adjacent to a long CP, or may be adjacent to a short CP, the receiving end cannot directly determine a time domain location of each CP based on the time domain location of the 32 OOK/FSK symbols. This application provides three methods for determining a CP.

### Method 1

The receiving end does not distinguish between a long CP and a short CP, but assumes that lengths of all CPs are the same. In this case, although a timing error exists, impact on demodulation performance is limited because the long CP does not differ greatly from the short CP.

The receiving end may determine the time domain locations of the N CPs based on a preset CP length and the time domain locations of the M first modulated symbols. The preset CP length is an average value of lengths of a CPs whose lengths are L1 and b CPs whose lengths are L2, and both a and b are positive integers.

For example, in FIG. 19, if a length of the long CP is 5.21 µs, and a length of the short CP is 4.69 µs, L1 = 5.21, and L2 = 4.69. If one slot includes two long CPs and 12 short CPs, a = 2, b = 12, and the preset CP length is equal to 4.79 (2/14×5.21+12/14×4.69) µs. After determining the time domain locations of the M first modulated symbols, the receiving end considers the length of each CP as 4.79 µs, to determine the time domain locations of the N CPs. Then, the receiving end may demodulate the wake up signal based on the locations of the N CPs.

### Method 2

The transmitting end notifies, in advance, the receiving end of an index of an OFDM symbol corresponding to the start location of the M first modulated symbols in one slot or an index of an OFDM symbol in one subframe.

When the first CP is a long CP or a short CP, the receiving end cannot determine whether the first CP is a long CP or a short CP, and the receiving end needs to determine an index, in a slot or a subframe, of an OFDM symbol corresponding to the start location of the M first modulated symbols. After determining the index, the receiving end may determine locations of the long and short CPs based on the subcarrier spacing of the OFDM transmitter and the index. The subcarrier spacing may be notified by the transmitting end in advance, or may be obtained by the receiving end through blind detection.

If the subcarrier spacing is 15 kHz, and an index of the OFDM symbol in one slot is 0 or 7 (or an index of the OFDM symbol in one subframe is 0 or 7), it indicates that the time interval before the 1^{st} symbol group of the synchronization sequence corresponds to a long CP. Therefore, it may be determined that in the synchronization sequence, the time interval before the 7n^{th} symbol group corresponds to a long CP, where n is 0 or a positive integer, and time intervals before remaining symbol groups in the synchronization sequence correspond to short CPs. If the index of the OFDM symbol is an index other than 0 and 7, it indicates that the time interval before the 1^{st} symbol group of the synchronization sequence corresponds to a short CP, and whether a time interval before another symbol group correspond to a long CP or a short CP may be learned through calculation based on the index. For example, if an index in one slot is *l*, a time interval before a ((7-*l*)+7n)^{th} symbol group corresponds to a long CP, and a time interval before another symbol group corresponds to a short CP. Therefore, in this implementation, the receiving end can accurately determine the time domain locations of the N CPs.

If the subcarrier spacing is 30 kHz, and an index of the OFDM symbol in one slot is 0 (or an index of the OFDM symbol in one subframe is 0 or 14), it indicates that the time interval before the 1^{st} symbol group of the synchronization sequence corresponds to a long CP. Therefore, it may be determined that in the synchronization sequence, the time interval before the 14n^{th} symbol group corresponds to a long CP, where n is 0 or a positive integer, and time intervals before remaining symbol groups in the synchronization sequence correspond to short CPs. If the index of the OFDM symbol is an index other than 0 and 14, it indicates that the time interval before the 1^{st} symbol group of the synchronization sequence corresponds to a short CP, and whether a time interval before another symbol group correspond to a long CP or a short CP may be learned through calculation based on the index. For example, if an index in one subframe is *l*, a time interval before a ((14-l)+14n)^{th} symbol group corresponds to a long CP, and a time interval before another symbol group corresponds to a short CP. Therefore, in this implementation, the receiving end can accurately determine the time domain locations of the N CPs.

If the subcarrier spacing is 60 kHz, and an index of the OFDM symbol in one subframe is 0 or 28, it indicates that the time interval before the 1^{st} symbol group of the synchronization sequence corresponds to a long CP. Therefore, it may be determined that in the synchronization sequence, the time interval before the 28n^{th} symbol group corresponds to a long CP, where n is 0 or a positive integer, and time intervals before remaining symbol groups in the synchronization sequence correspond to short CPs. If the index of the OFDM symbol is an index other than 0 and 28, it indicates that the time interval before the 1^{st} symbol group of the synchronization sequence corresponds to a short CP, and whether a time interval before another symbol group correspond to a long CP or a short CP may be learned through calculation based on the index. For example, if an index in one subframe is *l*, a time interval before a ((28-*l*)+28n)^{th} symbol group corresponds to long a CP, and a time interval before another symbol group corresponds to a short CP. Therefore, in this implementation, the receiving end can accurately determine the time domain locations of the N CPs.

As shown in FIG. 19, when the subcarrier spacing is 15 kHz, and the time domain locations of the M first modulated symbols are the location 1, the transmitting end may notify the receiving end of the OFDM index *l* = 0 (an example of third information) through a broadcast channel. In this way, the receiving end knows that the start location of the 32 OOK/FSK symbols is the start location of the OFDM symbol corresponding to the OFDM symbol index 0, and may further determine that a time interval before the 1^{st} symbol group of the synchronization sequence corresponds to a long CP, time intervals before 7^{th}, 14^{th}, and 21^{st} symbol groups (symbol groups corresponding to OFDM symbols 7, 14, and 21) correspond to long CPs, and a time interval before another symbol group corresponds to a short CP. When the time domain locations of the M first modulated symbols are the location 4, the transmitting end may notify the receiving end of the OFDM index *l* = 3 (an example of third information) through a broadcast channel. In this way, the receiving end may determine, based on (7-*l*)+7n, that time intervals before 4^{th}, 11^{th}, and 18^{th} symbol groups (symbol groups corresponding to OFDM symbols 4, 11, and 18) correspond to long CPs, and a time interval before another symbol group corresponds to a short CP.

The third information indicates the OFDM symbol index, so that a location relationship between the M first modulated symbols and the first CP may be flexibly set.

### Method 3

The transmitting end does not directly indicate the index of the OFDM symbol, but indicates the index of the OFDM symbol by using different synchronization sequences.

As shown in FIG. 19, when the time domain locations of the M first modulated symbols are the location 1, the transmitting end may use a synchronization sequence 1 {1100110011001100}. When the time domain locations of the M first modulated symbols are the location 4, the transmitting end may use a synchronization sequence 4 {1010101010101010}. The local sequence stored by the receiving end includes the synchronization sequence 1 and the synchronization sequence 4. If the receiving end performs a sliding correlation operation on the synchronization sequence 1 in the local sequence to obtain a correlation peak, the receiving end may determine that the time domain locations of the M first modulated symbols are the location 1. If the receiving end performs a sliding correlation operation on the synchronization sequence 4 in the local sequence to obtain a correlation peak, the receiving end may determine that the time domain locations of the M first modulated symbols are the location 4.

A correspondence exists between the start location of the M first modulated symbols and the synchronization sequence. After determining the synchronization sequence, the receiving end may determine the start location of the M first modulated symbols based on the correspondence, and the transmitting end does not need to separately send indication information, to reduce signaling overheads.

In Case 2, the start location of the M first modulated symbols may be an end location of any CP, and a manner of sending the synchronization signal is more flexible. In a multi-cell communication scenario, to avoid interference between neighboring cells, synchronization signals of the neighboring cells may need to be sent at different time domain locations. Therefore, this implementation can resolve a problem of interference between the synchronization signals of the neighboring cells.

Case 3: The start location of the M first modulated symbols is a preset location between any two adjacent CPs in the N CPs, where N is a positive integer greater than or equal to 1.

Case 3 may also be expressed as follows: The synchronization signal sent by the transmitter includes the M first modulated symbols, every X time-consecutive first modulated symbols form one symbol group, there is one time interval between adjacent modulated symbol groups, and the time interval corresponds to a CP of an OFDM symbol, where X is a positive integer. In a 1^{st} modulated symbol group, the synchronization signal may be sent from a 1^{st} modulated symbol location, or may be sent from a non-1^{st} modulated symbol location.

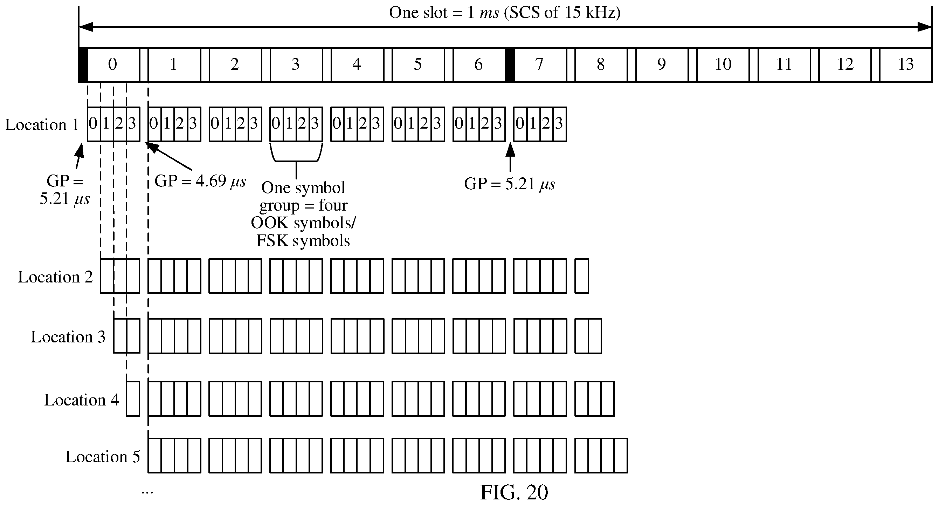

As shown in FIG. 20, a length of a synchronization sequence is 32 OOK/FSK symbols (an example of the M first modulated symbols). These OOK/FSK symbols are generated by the OFDM transmitter at the transmitting end, and a time domain location of each OFDM symbol includes four OOK/FSK symbols. Therefore, the synchronization sequence needs to occupy a length of eight OFDM symbols. In a 1^{st} symbol group (an OOK/FSK symbol group of a start location of the synchronization sequence), the synchronization sequence may be transmitted from a non-1^{st} OOK/FSK symbol, and in a last symbol group, the synchronization sequence may not end with a last OOK/FSK symbol. Remaining OOK/FSK symbol groups include a same quantity (4) of OOK/FSK symbols. When the subcarrier spacing is 15 kHz, one slot includes 14 CPs, and the 14 CPs includes two long CPs and 12 short CPs. A length of the long CP is 5.21 µs, and a length of the short CP is 4.69 µs. According to the foregoing descriptions, there are 64 time domain locations in one slot meeting a location requirement of the 32 OOK/FSK symbols. FIG. 20 shows five of the locations. At a location 1 to a location 4, a start location of the 32 OOK/FSK symbols is different locations of an OFDM symbol whose index is 0 in one subframe or slot. At a location 5, a start location of the 32 OOK/FSK symbols is a start location of an OFDM symbol whose index is 1 in one subframe or slot.

Because the start location of the 32 OOK/FSK symbols may be adjacent to a long CP, may be adjacent to a short CP, or may not be adjacent to a CP, the receiving end cannot directly determine a time domain location of each CP based on the time domain location of the 32 OOK/FSK symbols. This application provides two methods for determining a CP.

### Method 4

The transmitting end notifies, in advance, the receiving end of an index of an OFDM symbol corresponding to the start location of the M first modulated symbols in a slot or a subframe, and a symbol index of the start location of the M first modulated symbols in the 1^{st} modulated symbol group corresponding to the index of the OFDM symbol.

As shown in FIG. 20, one slot includes 14 OFDM symbols, a location of each OFDM symbol corresponds to four OOK/FSK symbols, and indexes of the four OOK/FSK symbols in a symbol group are 0, 1, 2, and 3. When the time domain locations of the M first modulated symbols are the location 1, the transmitting end may notify the receiving end of the OFDM index 0 (an example of third information) and an OOK/FSK index 0 (an example of fourth information) through a broadcast channel. In this way, the receiving end knows that the start location of the 32 OOK/FSK symbols is a start location of the OFDM symbol corresponding to the OFDM symbol index 0. When the time domain locations of the M first modulated symbols are the location 3, the transmitting end may notify the receiving end of the OFDM index 0 (an example of third information) and an OOK/FSK index 2 (an example of fourth information) through a broadcast channel. In this way, the receiving end knows that the start location of the 32 OOK/FSK symbols is a start location of a 3^{rd} OOK/FSK symbol in the OFDM symbol corresponding to the OFDM symbol index 0. When the time domain locations of the M first modulated symbols are the location 5, the transmitting end may notify the receiving end of the OFDM index 1 (an example of third information) and an OOK/FSK index 0 (an example of fourth information) through a broadcast channel. In this way, the receiving end knows that the start location of the 32 OOK/FSK symbols is a start location of the OFDM symbol corresponding to the OFDM symbol index 1. After determining the start location of the 32 OOK/FSK symbols, the receiving end may determine a time domain location of each CP in the wake up signal.

The start location of the M first modulated symbols is indicated by using the third information and the fourth information, and a location relationship between the M first modulated symbols and the first CP may be flexibly set.

### Method 5

The transmitting end does not directly indicate an index of an OFDM symbol and an index of an OOK/FSK symbol, but indicates the index of the OFDM symbol and the index of the OOK/FSK symbol by using different synchronization sequences.

As shown in FIG. 20, when the time domain locations of the M first modulated symbols are the location 1, the transmitting end may use a synchronization sequence 1 {1100110011001100}. When the time domain locations of the M first modulated symbols are the location 3, the transmitting end may use a synchronization sequence 3 {1010101010101010}. When the time domain locations of the M first modulated symbols are the location 5, the transmitting end may use a synchronization sequence 5 {0101010101010101}. The local sequence stored by the receiving end includes the synchronization sequence 1, the synchronization sequence 3, and the synchronization sequence 5. If the receiving end obtains a correlation peak by performing a sliding correlation operation on the synchronization sequence 1 in the local sequence, the receiving end may determine that the time domain locations of the M first modulated symbols are the location 1. If the receiving end obtains a correlation peak by performing a sliding correlation operation on the synchronization sequence 3 in the local sequence, the receiving end may determine that the time domain locations of the M first modulated symbols are the location 3. If the receiving end obtains the correlation peak by performing a sliding correlation operation on the synchronization sequence 5 in the local sequence, the receiving end may determine that the time domain locations of the M first modulated symbols are the location 5.

A correspondence exists between the start location of the M first modulated symbols and the synchronization sequence. After determining the synchronization sequence, the receiving end may determine the start location of the M first modulated symbols based on the correspondence, and the transmitting end does not need to separately send indication information, to reduce signaling overheads.

In Case 3, the start location of the M first modulated symbols is the preset location between any two adjacent CPs in the N CPs. In comparison with Case 2, a degree of freedom of the start location of the M first modulated symbols is further increased, and a manner of sending the synchronization signal is more flexible.

The transmitting end may indicate, through the broadcast channel, a case to which the location relationship between the M first modulated symbols and the N CPs belongs. For example, the transmitting end may broadcast a system information block (system information block, SIB) through a physical downlink shared channel (physical downlink shared channel, PDSCH). When the SIB carries the first information, the receiving end may determine that the start location of the M first modulated symbols is the end location of the first CP. When the SIB carries the second information, the receiving end may determine that the start location of the M first modulated symbols is the preset location between any two adjacent CPs in the N CPs.

When the SIB carries the first information, if the receiving end does not receive the third information, the receiving end determines that the location relationship between the M first modulated symbols and the N CPs is the relationship described in Case 1; or if the receiving end receives the third information, the receiving end determines that the location relationship between the M first modulated symbols and the N CPs is the relationship described in Case 2.

The transmitting end may further indicate the location relationship between the M first modulated symbols and the N CPs in another manner. A person skilled in the art may flexibly set the location relationship between the M first modulated symbols and the first CP based on different communication scenarios.

The foregoing describes in detail an example of the method provided in embodiments of this application. It may be understood that, to implement the foregoing functions, a corresponding apparatus includes a corresponding hardware structure and/or software module for performing each function. A person skilled in the art should easily be aware that, in combination with units and algorithm steps of the examples described in embodiments disclosed in this specification, this application may be implemented by hardware or a combination of hardware and computer software. Whether a function is performed by hardware or hardware driven by computer software depends on particular applications and design constraint conditions of the technical solutions. A person skilled in the art may use different methods to implement the described functions for each particular application, but it should not be considered that the implementation goes beyond the scope of this application.

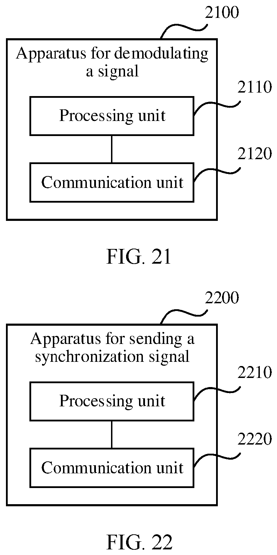

FIG. 21 is a diagram of a structure of an apparatus for demodulating a signal according to an embodiment of this application. The apparatus 2100 includes a processing unit 2110 and a communication unit 2120.

The communication unit 2120 is configured to receive a synchronization signal over a low power link in at least two communication links of the apparatus 2100, where the synchronization signal includes M first modulated symbols and N cyclic prefixes CPs, the M first modulated symbols are non-OFDM symbols, M is a positive integer greater than 1, and N is a positive integer.

The processing unit 2110 is configured to: determine time domain locations of the M first modulated symbols; determine time domain locations of the N CPs based on the time domain locations of the M first modulated symbols; and demodulate, based on the time domain locations of the N CPs, the signal transmitted on the low power link.

Optionally, a start location of the M first modulated symbols is an end location of a first CP in the N CPs.

Optionally, N is a positive integer greater than 1, lengths of the N CPs are different, and the first CP is a CP with a longer length in the N CPs.

Optionally, the first CP is any one of the N CPs.

Optionally, N is a positive integer greater than 1, the lengths of the N CPs are different, and the processing unit 2110 is specifically configured to determine the time domain locations of the N CPs based on a preset CP length and the time domain locations of the M first modulated symbols, where the preset CP length is an average value of lengths of a CPs whose lengths are L1 and b CPs whose lengths are L2, and both a and b are positive integers.

Optionally, before receiving the synchronization signal over the low power link, the communication unit 2120 is further configured to receive first information, where the first information indicates that the start location of the M first modulated symbols is the end location of the first CP.

Optionally, a start location of the M first modulated symbols is a preset location between any two adjacent CPs in the N CPs, where N is a positive integer greater than 1.

Optionally, before receiving the synchronization signal over the low power link, the communication unit 2120 is further configured to receive second information, where the second information indicates that the start location of the M first modulated symbols is the preset location between any two adjacent CPs in the N CPs.

Optionally, in the N CPs, every two adjacent CPs are separated by m first modulated symbols, where N is a positive integer greater than 1, and m is a positive integer.

Optionally, the processing unit 2110 is specifically configured to determine the time domain locations of the N CPs based on the time domain locations of the M first modulated symbols and an OFDM symbol index corresponding to the start location of the M first modulated symbols.

Optionally, before receiving the synchronization signal over the low power link, the communication unit 2120 is further configured to receive third information, where the third information indicates the OFDM symbol index.

Optionally, before receiving the synchronization signal over the low power link, the communication unit 2120 is further configured to receive fourth information, where the fourth information indicates a location of the start location of the M first modulated symbols in an OFDM symbol corresponding to the OFDM symbol index.

Optionally, a correspondence exists between the start location of the M first modulated symbols and a synchronization sequence carried in the synchronization signal.

Optionally, the processing unit 2110 is specifically configured to determine the time domain locations of the M first modulated symbols based on a plurality of local sequences and the synchronization sequence carried in the synchronization signal. The plurality of local sequences include a target sequence, and the target sequence is a sequence that is the same as the synchronization sequence.

Optionally, the first modulated symbol is an FSK symbol, an ASK symbol, or an OOK symbol.

It may be clearly learned by a person skilled in the art that, for specific operating processes of the communication apparatus 2100 described above and for technical effects achieved by performing the steps, refer to descriptions in the foregoing method embodiments. For brevity, details are not described herein again.

The apparatus 2100 may be a chip. The processing unit 2110 may be implemented by using hardware or software. When the processing unit is implemented by using hardware, the processing unit may be a logic circuit, an integrated circuit, or the like. When the processing unit 2110 is implemented by using software, the processing unit 2110 may be a general-purpose processor, and is implemented by reading software code stored in a storage unit. The storage unit may be integrated in the processing unit 2110, or located outside the processing unit 2110 and exist independently.

FIG. 22 is a diagram of a structure of an apparatus for sending a synchronization signal according to an embodiment of this application. The apparatus 2200 includes a processing unit 2210 and a communication unit 2220.

The processing unit 2210 is configured to generate a synchronization signal, where the synchronization signal includes M first modulated symbols and N cyclic prefixes CPs, a modulated symbol of the synchronization signal is a non-orthogonal frequency division multiplexing OFDM symbol, an association relationship exists between time domain locations of the M first modulated symbols and time domain locations of the N CPs, a receiving end of the synchronization signal includes at least two communication links, the synchronization signal is used for synchronization between a receiver of a low power link in the at least two communication links of the receiving end and a transmitter, M is a positive integer greater than 1, and N is a positive integer.

The communication unit 2220 is configured to send the synchronization signal.

Optionally, a start location of the M first modulated symbols is an end location of a first CP in the N CPs.

Optionally, N is a positive integer greater than 1, lengths of the N CPs are different, and the first CP is a CP with a longer length in the N CPs.

Optionally, the first CP is any one of the N CPs.

Optionally, before sending the synchronization signal, the communication unit 2220 is further configured to send first information, where the first information indicates that the start location of the M first modulated symbols is the end location of the first CP.

Optionally, a start location of the M first modulated symbols is a preset location between any two adjacent CPs in the N CPs, where N is a positive integer greater than 1.

Optionally, before sending the synchronization signal, the communication unit 2220 is further configured to send second information, where the second information indicates that the start location of the M first modulated symbols is the preset location between any two adjacent CPs in the N CPs.

Optionally, in the N CPs, every two adjacent CPs are separated by m first modulated symbols, where N is a positive integer greater than 1, and m is a positive integer.

Optionally, before sending the synchronization signal, the communication unit 2220 is further configured to send third information, where the third information indicates an OFDM symbol index, and the OFDM symbol index is used by a receiving end of the synchronization signal to determine the time domain locations of the N CPs.

Optionally, before sending the synchronization signal, the communication unit 2220 is further configured to send fourth information, where the fourth information indicates a location of the start location of the plurality of first modulated symbols in an OFDM symbol corresponding to the OFDM symbol index.

Optionally, a correspondence exists between the start location of the M first modulated symbols and a synchronization sequence carried in the synchronization signal.

Optionally, the first modulated symbol is an FSK symbol, an ASK symbol, or an OOK symbol.

The apparatus 2200 may be a chip. The processing unit 2210 may be implemented by using hardware or software. When the processing unit is implemented by using hardware, the processing unit may be a logic circuit, an integrated circuit, or the like. When the processing unit 2210 is implemented by using software, the processing unit 2210 may be a general-purpose processor, and is implemented by reading software code stored in a storage unit. The storage unit may be integrated in the processing unit 2210, or located outside the processing unit 2210 and exist independently.

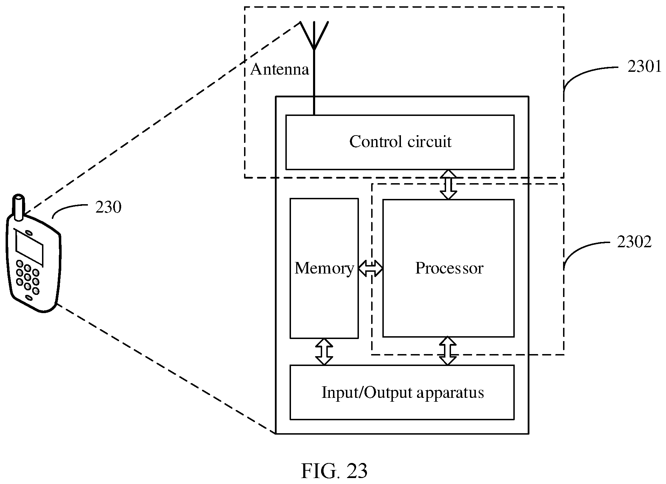

FIG. 23 is a diagram of a structure of a terminal device according to this application. The terminal device may perform the steps of the receiving end or the transmitting end in the foregoing method embodiments. For ease of description, FIG. 23 shows only main components of the terminal device. As shown in FIG. 23, the terminal device 230 includes a processor, a memory, a control circuit, an antenna, and an input/output apparatus. The processor is mainly configured to process a communication protocol and communication data, control the entire terminal device, execute a software program, and process data of the software program, for example, configured to support the terminal device in performing actions described in the foregoing method embodiments. The memory is mainly configured to store the software program and data. The control circuit is mainly configured to convert a baseband signal and a radio frequency signal and process the radio frequency signal. The control circuit and the antenna together may also be referred to as a transceiver, and are mainly configured to receive and send a radio frequency signal in a form of an electromagnetic wave. The input/output apparatus, for example, a touchscreen, a display, or a keyboard, is mainly configured to receive data input by a user and output data to the user.

After the terminal device is powered on, the processor may read the software program in a storage unit, interpret and execute instructions of the software program, and process the data of the software program. When data needs to be sent in a wireless manner, the processor performs baseband processing on the to-be-sent data, and then outputs a baseband signal to a radio frequency circuit. The radio frequency circuit performs radio frequency processing on the baseband signal, and then sends, through the antenna, a radio frequency signal in an electromagnetic wave form. When data is sent to the terminal device, the radio frequency circuit receives the radio frequency signal through the antenna, converts the radio frequency signal into a baseband signal, and outputs the baseband signal to the processor. The processor converts the baseband signal into data, and processes the data.

A person skilled in the art may understand that, for ease of description, FIG. 23 shows only one memory and one processor. In an actual terminal device, there may be a plurality of processors and a plurality of memories. The memory may also be referred to as a storage medium, a storage device, or the like. This is not limited in this application.

In an optional implementation, the processor may include a baseband processor and/or a central processing unit. The baseband processor is mainly configured to process the communication protocol and the communication data. The central processing unit is mainly configured to: control the entire terminal device, execute the software program, and process the data of the software program. The processor in FIG. 23 may integrate functions of the baseband processor and the central processing unit. A person skilled in the art may understand that the baseband processor and the central processing unit may also be independent processors, and are interconnected by using a technology like a bus. A person skilled in the art may understand that the terminal device may include a plurality of baseband processors to adapt to different network standards, and the terminal device may include a plurality of central processing units to enhance processing capabilities of the terminal device, and components of the terminal device may be connected through various buses. The baseband processor may also be expressed as a baseband processing circuit or a baseband processing chip. The central processing unit may also be expressed as a central processing circuit or a central processing chip. A function of processing the communication protocol and the communication data may be built in the processor, or may be stored in the storage unit in a form of a software program, and the processor executes the software program to implement a baseband processing function.

In this embodiment of this application, the antenna and the control circuit that have receiving and sending functions may be considered as a transceiver unit 2301 of the terminal device 230, for example, configured to support the terminal device in implementing the receiving function and the sending function in the method embodiments. The processor that has a processing function is considered as a processor 2302 of the terminal device 230. The terminal device 230 includes a transceiver unit 2301 and a processor 2302. The transceiver unit may also be referred to as a transceiver, a transceiver machine, a transceiver apparatus, or the like. Optionally, a component that is configured to implement a receiving function and that is in the transceiver unit 2301 may be considered as a receiving unit, and a component that is configured to implement a sending function and that is in the transceiver unit 2301 may be considered as a sending unit. That is, the transceiver unit 2301 includes the receiving unit and the sending unit. The receiving unit may also be referred to as a receiver, an input port, a receiving circuit, or the like. The sending unit may be referred to as a transmitter, a transmitter machine, a transmitting circuit, or the like. For example, the transceiver unit 2301 may not include the antenna, but includes only the circuit part, so that the antenna is disposed outside the transceiver unit.

The processor 2302 may be configured to execute instructions stored in the memory, to control the transceiver unit 2301 to receive a signal and/or send a signal, to complete the functions of the terminal device in the foregoing method embodiments. In an implementation, it may be considered that a function of the transceiver unit 2301 is implemented by using a transceiver circuit or a dedicated transceiver chip. When receiving and sending various types of signals, the processor 2302 controls the transceiver unit 2301 to implement the receiving. Therefore, the processor 2302 is a decider of the signal sending and receiving, and initiates data sending and receiving operations. The transceiver unit 2301 is a performer of the signal sending and receiving.

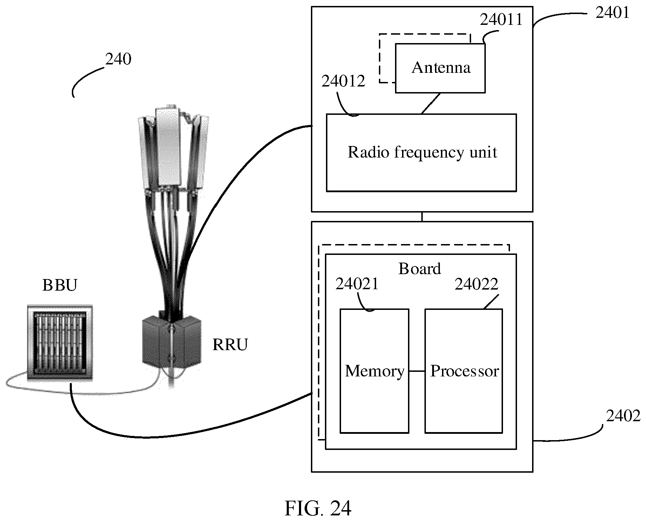

FIG. 24 is a diagram of a structure of a network device according to this application. The network device may be, for example, a base station. As shown in FIG. 24, the base station may be used in the communication system shown in FIG. 1, to perform steps of the transmitting end in the foregoing method embodiments. The base station 240 may include one or more radio frequency units, such as a remote radio unit (remote radio unit, RRU) 2401 and one or more baseband units (baseband unit, BBU) (which may also be referred to as digital units (digital unit, DU)) 2402. The RRU 2401 may be referred to as a transceiver unit, a transceiver, a transceiver circuit, a transceiver component, or the like, and may include at least one antenna 24011 and a radio frequency unit 24012. The RRU 2401 is mainly configured to send and receive a radio frequency signal and convert a radio frequency signal and a baseband signal. The BBU 2402 is mainly configured to perform baseband processing, control a base station, and the like. The RRU 2401 and the BBU 2402 may be physically disposed together, or may be physically disposed separately, namely, a distributed base station.

The BBU 2402 is a control center of the base station, may also be referred to as a processing unit, and is mainly configured to complete baseband processing functions such as channel coding, multiplexing, modulation, and spectrum spreading. For example, the BBU (the processing unit) 2402 may be configured to control the base station to perform the operation procedures of the network device in the foregoing method embodiments.

In an embodiment, the BBU 2402 may include one or more boards. The plurality of boards may jointly support a radio access network of a single access standard (for example, a long term evolution (long term evolution, LTE) network), or may separately support radio access networks of different access standards (for example, an LTE network, an NR network, or another network). The BBU 2402 further includes a memory 24021 and a processor 24022. The memory 24021 is configured to store necessary instructions and data. The processor 24022 is configured to control the base station to perform a necessary action, for example, is configured to control the base station to perform an operation procedure related to the network device in the foregoing method embodiments. The memory 24021 and the processor 24022 may serve the one or more boards. In other words, a memory and a processor may be disposed on each board. Alternatively, a plurality of boards may share a same memory and a same processor. In addition, a necessary circuit may further be disposed on each board.

It may be understood that, the processor in embodiments of this application may be an integrated circuit chip, and has a signal processing capability. In an implementation process, steps in the foregoing method embodiments can be implemented by using a hardware integrated logic circuit in the processor, or by using instructions in a form of software. The foregoing processor may be a general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or transistor logic device, or a discrete hardware component. It may implement or perform the methods, the steps, and logical block diagrams that are disclosed in embodiments of this application. The general-purpose processor may be a microprocessor, or the processor may be any conventional processor or the like. Steps of the methods disclosed with reference to embodiments of this application may be directly executed and accomplished by using a hardware decoding processor, or may be executed and accomplished by using a combination of hardware and software modules in the decoding processor. The software module may be located in a mature storage medium in the art, such as a random access memory, a flash memory, a read-only memory, a programmable read-only memory, an electrically erasable programmable memory, or a register. The storage medium is located in the memory, and a processor reads information in the memory and completes the steps in the foregoing methods in combination with hardware of the processor.

It may be understood that the memory in this embodiment of this application may be a volatile memory or a non-volatile memory, or may include a volatile memory and a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. By way of example but not limitation, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchronous link dynamic random access memory (synchlink DRAM, SLDRAM), and a direct rambus dynamic random access memory (direct rambus RAM, DR RAM). It should be noted that the memory of the systems and methods described in this specification includes but is not limited to these and any memory of another proper type.

This application further provides a computer-readable medium storing a computer program. When the computer program is executed by a computer, functions of any one of the foregoing method embodiments are implemented.

This application further provides a computer program product. When the computer program product is executed by a computer, functions of any one of the foregoing method embodiments are implemented.

All or some of the foregoing embodiments may be implemented by using software, hardware, firmware, or any combination thereof. When software is used to implement embodiments, all or a part of embodiments may be implemented in a form of the computer program product. The computer program product includes one or more computer instructions. When the computer instructions are loaded and executed on the computer, the procedure or functions according to embodiments of this application are all or partially generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, microwave, or the like) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a digital video disc (digital video disc, DVD)), a semiconductor medium (for example, a solid-state drive (solid-state drive, SSD)), or the like.

It should be understood that, an "embodiment" mentioned throughout this specification means that particular features, structures, or characteristics related to this embodiment are included in at least one embodiment of this application. Therefore, embodiments in the entire specification do not necessarily refer to a same embodiment. In addition, these particular features, structures, or characteristics may be combined in one or more embodiments by using any appropriate manner. It should be understood that sequence numbers of the foregoing processes do not mean execution sequences in various embodiments of this application. The execution sequences of the processes should be determined based on functions and internal logic of the processes, and should not be construed as any limitation on the implementation processes of embodiments of this application.

It should be further understood that, in this application, "when" and "if" mean that UE or a base station performs corresponding processing in an objective situation, but do not constitute any limitation on time, do not require the UE or the base station to perform a determining action during implementation, and do not mean other limitations either.

In addition, the terms "system" and "network" may be used interchangeably in this specification. The term "and/or" in this specification describes only an association relationship for describing associated objects and represents that three relationships may exist. For example, A and/or B may represent the following three cases: Only A exists, both A and B exist, and only B exists.

It should be understood that in embodiments of this application, "B corresponding to A" indicates that B is associated with A, and B may be determined based on A. However, it should be further understood that determining B based on A does not mean that B is determined based only on A. B may alternatively be determined based on A and/or other information.

In conclusion, the foregoing descriptions are merely exemplary embodiments of the technical solutions of this application, but are not intended to limit the protection scope of this application. Any modification, equivalent replacement, or improvement made without departing from the spirit and principle of this application shall fall within the protection scope of this application.

## Claims

1. A method for demodulating a signal, applied to a terminal device, and comprising:
receiving a synchronization signal over a low power link in at least two communication links of the terminal device, wherein the synchronization signal comprises M first modulated symbols and N cyclic prefixes CPs, the M first modulated symbols are non-orthogonal frequency division multiplexing OFDM symbols, M is a positive integer greater than 1, and N is a positive integer;
determining time domain locations of the M first modulated symbols;
determining time domain locations of the N CPs based on the time domain locations of the M first modulated symbols; and
demodulating, based on the time domain locations of the N CPs, the signal transmitted on the low power link.

2. The method according to claim 1, wherein a start location of the M first modulated symbols is located at an end location of a first CP in the N CPs.

3. The method according to claim 2, wherein N is a positive integer greater than 1, lengths of the N CPs are different, and the first CP is a CP with a longer length in the N CPs.

4. The method according to claim 2, wherein the first CP is any one of the N CPs.

5. The method according to claim 4, wherein N is a positive integer greater than 1, lengths of the N CPs are different, and the determining time domain locations of the N CPs based on the time domain locations of the M first modulated symbols comprises:
determining the time domain locations of the N CPs based on a preset CP length and the time domain locations of the M first modulated symbols, wherein the preset CP length is an average value of lengths of a CPs whose lengths are L1 and b CPs whose lengths are L2, and both a and b are positive integers.

6. The method according to any one of claims 2 to 5, wherein before the receiving a synchronization signal over a low power link, the method further comprises:
receiving first information, wherein the first information indicates that the start location of the M first modulated symbols is located at the end location of the first CP.

7. The method according to claim 1, wherein a start location of the M first modulated symbols is a preset location between any two adjacent CPs in the N CPs, and N is a positive integer greater than 1.

8. The method according to claim 7, wherein before the receiving a synchronization signal over a low power link, the method further comprises:
receiving second information, wherein the second information indicates that the start location of the M first modulated symbols is the preset location between any two adjacent CPs in the N CPs.

9. The method according to any one of claims 1 to 8, wherein in the N CPs, every two adjacent CPs are separated by m first modulated symbols, N is a positive integer greater than 1, and m is a positive integer.

10. The method according to any one of claims 1-4 or 6-9, wherein the determining time domain locations of the N CPs based on the time domain locations of the M first modulated symbols comprises:
determining the time domain locations of the N CPs based on the time domain locations of the M first modulated symbols and an OFDM symbol index corresponding to the start location of the M first modulated symbols.

11. The method according to claim 10, wherein before the receiving a synchronization signal over a low power link, the method further comprises:
receiving third information, wherein the third information indicates the OFDM symbol index.

12. The method according to claim 11, wherein before the receiving a synchronization signal over a low power link, the method further comprises:
receiving fourth information, wherein the fourth information indicates a location of the start location of the M first modulated symbols in an OFDM symbol corresponding to the OFDM symbol index.

13. The method according to claim 10, wherein a correspondence exists between the start location of the M first modulated symbols and a synchronization sequence carried in the synchronization signal.

14. The method according to any one of claims 1 to 13, wherein the determining time domain locations of the M first modulated symbols comprises:
determining the time domain locations of the M first modulated symbols based on a plurality of local sequences and the synchronization sequence carried in the synchronization signal, wherein the plurality of local sequences comprise a target sequence, and the target sequence is a sequence that is the same as the synchronization sequence.

15. The method according to any one of claims 1 to 14, wherein the first modulated symbol is a frequency shift keying FSK symbol, an amplitude shift keying ASK symbol, or an on-off-keying OOK symbol.

16. A method for sending a synchronization signal, comprising:
generating a synchronization signal, wherein the synchronization signal comprises M first modulated symbols and N cyclic prefixes CPs, a modulated symbol of the synchronization signal is a non-orthogonal frequency division multiplexing OFDM symbol, an association relationship exists between time domain locations of the M first modulated symbols and time domain locations of the N CPs, a receiving end of the synchronization signal comprises at least two communication links, the synchronization signal is used for synchronization between a receiver of a low power link in the at least two communication links of the receiving end and a transmitter, M is a positive integer greater than 1, and N is a positive integer; and
sending the synchronization signal.

17. The method according to claim 16, wherein a start location of the M first modulated symbols is an end location of a first CP in the N CPs.

18. The method according to claim 17, wherein N is a positive integer greater than 1, lengths of the N CPs are different, and the first CP is a CP with a longer length in the N CPs.

19. The method according to claim 17, wherein the first CP is any one of the N CPs.

20. The method according to any one of claims 17 to 19, wherein before the sending the synchronization signal, the method further comprises:
sending first information, wherein the first information indicates that the start location of the M first modulated symbols is the end location of the first CP.

21. The method according to claim 16, wherein a start location of the M first modulated symbols is a preset location between any two adjacent CPs in the N CPs, and N is a positive integer greater than 1.

22. The method according to claim 21, wherein before the sending the synchronization signal, the method further comprises:
sending second information, wherein the second information indicates that the start location of the M first modulated symbols is the preset location between any two adjacent CPs in the N CPs.

23. The method according to any one of claims 16 to 22, wherein in the N CPs, every two adjacent CPs are separated by m first modulated symbols, N is a positive integer greater than 1, and m is a positive integer.

24. The method according to any one of claims 16 to 23, wherein before the sending the synchronization signal, the method further comprises:
sending third information, wherein the third information indicates an OFDM symbol index, and the OFDM symbol index is used by the receiving end of the synchronization signal to determine the time domain locations of the N CPs.

25. The method according to claim 24, wherein before the sending the synchronization signal, the method further comprises:
sending fourth information, wherein the fourth information indicates a location of the start location of the M first modulated symbols in an OFDM symbol corresponding to the OFDM symbol index.

26. The method according to any one of claims 16 to 23, wherein a correspondence exists between the start location of the M first modulated symbols and a synchronization sequence carried in the synchronization signal.

27. The method according to any one of claims 16 to 26, wherein the first modulated symbol is a frequency shift keying FSK symbol, an amplitude shift keying ASK symbol, or an on-off-keying OOK symbol.

28. An apparatus for demodulating a signal, wherein the apparatus comprises a processor and a memory, the memory is configured to store a computer program, and the processor is configured to invoke the computer program from the memory and run the computer program, to cause the apparatus to perform the method according to any one of claims 1 to 15.

29. An apparatus for sending a synchronization signal, wherein the apparatus comprises a processor and a memory, the memory is configured to store a computer program, and the processor is configured to invoke the computer program from the memory and run the computer program, to cause the apparatus to perform the method according to any one of claims 16 to 27.

30. A computer-readable storage medium, wherein the computer-readable storage medium stores a computer program, and when the computer program is executed by a processor, the processor is caused to perform the method according to any one of claims 1 to 15, or the processor is caused to perform the method according to any one of claims 16 to 27.
